# EUROPEAN PATENT SPECIFICATION

(11) **EP 1 473 331 B1**
(45) Date of publication and mention of the grant of the patent: **30.10.2013**
(21) Application number: 03737466.7
(22) Date of filing: 03.02.2003
(51) Int. Cl.: C09D 5/00, C09D 5/16, C09D 133/04, C09D 183/02, C09D 183/04, C09D 183/07, C09D 143/04, C08L 71/02

(54) **ANTIFOULING WATER-BASED COATING COMPOSITION**
ANTIFOULING-BESCHICHTUNGSZUSAMMENSETZUNG
COMPOSITION AQUEUSE DE REVETEMENT ANTISALISSURE

(30) Priority: 04.02.2002 JP 2002026933; 15.10.2002 JP 2002301080
(43) Date of publication of application: 03.11.2004
(73) Proprietor: Asahi Kasei Chemicals Corporation, Tokyo 100-8440 (JP)
(72) Inventor: KAMIYAMA, Yasuyuki, Shizuoka-shi, Shizuoka 420-0043 (JP); YAMAMOTO, Jun-ichi, Kawasaki-shi, Kanagawa 210-0804 (JP); SASAKI, Megumi, Setagaya-ku, Tokyo 157-0065 (JP)
(74) Representative: von Kreisler Selting Werner
(86) International application number: PCT/JP2003/001071
(87) International publication number: WO 2003/066747

(56) References cited:
- JP-A- 7 026 165
- JP-A- 8 231 887
- JP-A- 11 116 885
- JP-A- 11 263 936
- JP-A- 59 152 972
- JP-A- 60 127 371
- JP-A- 2001 294 801
- JP-A- 2002 332 354

## Description

### TECHNICAL FIELD

The present invention relates to a water-based coating composition excellent in fouling-resistance. The present invention specifically relates to a water-based anti-fouling coating composition useful as coatings, construction finishing materials, etc.; a coating including the water-based anti-fouling coating composition concerned, and a method for coating using the coating concerned. The present invention further relates to anti-fouling articles having a coating layer formed by using the coating concerned.

### BACKGROUND ART

Recently, fouling with rain streaks or raindrops found on a surface of a wall of buildings is generally formed in areas with rain water flowing and falling. There is a problem such that difference of fouling between areas with and without rain streaks impairs beautiful appearance of the buildings.
Usually, this rain streaks-like fouling can be prevented by increasing hydrophilicity on a surface of a coating film. For example, in solvent-based coatings, a technique has been proposed that a coating film surface is hydrophilized by configurating alkoxy silanes onto the coating film surface and by hydrolyzing with time. This technique has a problem that climate condition approximately one month immediately after film formation influences degree of hydrolysis, and therefore, continuous dry conditions especially makes hydrolysis delayed, leading to fouling of the coating film.

As a method of preventing this rain streaks-like fouling in water-based coatings, although JP-A-09-52974 publication proposes that addition of a particular solvent to a water-based emulsion makes a water contact angle of a coating film smaller, and can reduce rain streaks-like fouling. However, with such a coating, sufficient effect was not obtained, and it was difficult to maintain the effect over a long period of time.

JP-A-10-46099 proposes that a coating obtained by emulsion polymerization of a particular unsaturated monomer with a polymerizable surface active agent can reduce rain streaks-like fouling. However, with such a coating it was difficult to maintain its effect over a long period of time.

JP-A-10-298489 proposes that a polycarbonyl compound is cross-linked by a cross linking agent of a particular block copolymer and a dihydrazide compound cross linking agent together to form a coating, which can reduce rain streaks-like fouling. However, such a coating failed to give sufficient water resistance but provided inferior durability.

JP-A-11-217480 discloses a method of using a reactive polymerization emulsifier having an oxyalkylene group. However, it was not enough for fouling-resistance.

JP-A-54-139938 proposes a method for coating a top coat of a mixture of an acrylic based resin and a colloidal silica on a coating film of a water-based dispersion of a colloidal silica including an inorganic filler. However, sufficient surface hardness and fouling-resistance were not obtained only with the top coat.

JP-A-07-26165 proposes blending of colloidal silica to an emulsion obtained by emulsion polymerization using a reactive surface active agent for improvement of heat-resistant blocking and storage stability of a coating. A large amount of the colloidal silica, however, results in low water resistance of the coating film obtained.

Both of JP-A-56-57860, for improvement of adhesive properties as an undercoat material for inorganic building materials, and JP-A-11-116885, for giving fouling-resistance of a coating film, propose blending of an emulsion obtained by copolymerization of an alkoxy silane with an ethylenic group in emulsion polymerization, with a colloidal silica. However, such a blend causes aggregation in storage and makes coating impossible, or addition of a large amount of emulsifiers for stabilization results in remarkably low water resistance of the coating film.

In JP-B-03-47669, a large amount of a colloidal silica is added to an emulsion. Such a larger addition leads to low water resistance of a coating film obtained. Also, storage of a mixed coating caused aggregation and made coating impossible.

JP-A-07-118573 proposes coating of a blend of an emulsion including colloidal silica with a colloidal silica for anti-slip. However, such a blend did not result in sufficient gloss in use for coatings.

JP-A-59-217702 proposes a water dispersible resin composition obtained by emulsion polymerization in the presence of a colloidal silica and a polymerizable monomer having emulsification capability. However, the composition resulted in poor polymerization stability and water resistance. Also, due to a small amount of the colloidal silica, the composition failed in developing fouling-resistance.

JP-A-11-1893 proposes a water-based coating composition obtained by emulsion polymerization of an ethylenic unsaturated compound in the presence of a colloidal silica, active agent and water. The composition, however, had a large amount of colloidal silica content and gave inferior polymerization stability and water resistance.

JP-A-09-165554 discloses a composition including a latex with a large amount of dimethyl siloxane unit and a keto group, a hydrazide compound and a colloidal silica. However, since it required a large amount of the colloidal silica in a coating for developing fouling resistance, sufficient storage stability of the coating was not obtained.

JP-A-10-168393 discloses a composition consisting of an emulsion including a keto group and a silanol group, a hydrazide compound and a colloidal silica with surface treated by a hydrolyzable silane. However, since a large amount of surface treated colloidal silica was required in a coating for developing fouling-resistance, sufficient storage stability of the coating was not obtained.

JP-A-2001-335721 discloses a composition obtained by blending of a colloidal silica having a surface treated by a nonionic surface active agent and a vinyl polymer, and an emulsion. However, it required a large amount of surface active agents for stability and resulted in inferior water resistance and stability.

JP-A-55-40717 proposes blending of a colloidal silica, a particular surface active agent and an emulsion. However, it required a large amount of colloidal silica added to the emulsion, sufficient water resistance and weather resistance of a coating film were not obtained.

JP-A-8231887 discloses a coating composition (a) a copolymer emulsion obtained by emulsion polymerization of a monomer mixture of:
(i) 60-99 wt.% (meth)acrylic acid ester(s) of 1-18C alkyl group and a monoalkenyl benzene;
(ii) 1-20 wt.% ethylenic unsaturated monomer(s) having a functional group; and (iii) a balance of ethylenic unsaturated monomer(s) except (a) and (b), in the presence of radical polymerization initiator using a sulfosuccinic acid reactive surfactant (C) such as Eleminol^{™} JS-2 or Latemul^{™} S180A in combination with a surface active agent having a radical polymerizable double bond and including an alkylene oxide group (D) such as Aquaron^{™} HS-10 or RN-20; and (B) an inorganic colloid sol, such as silica.

EP-A-125661 represents a prior art under Article 54 (3) EPC. It discloses a stain resistant aqueous dispersion obtained by mixing, emulsifying and reacting (A1) an organosilane represented by the general formula (1), (A2) an acrylic monomer, (C) in the presence of an emulsifier such as Latemul^{™} S180A. Optionally a colloidal silica (B) is comprised.

### DISCLOSURE OF THE INVENTION

An object of the present invention is providing water-based anti-fouling coating composition that enables better reduction of rain streaks-like fouling or stain by rain as compared with conventional materials in outdoors exposure, that enables especially prevention from fouling immediately after film formation, and that has excellent durability in effect for preventing rain streaks-like fouling or stain by rain, and excellent preservation stability of a coating.

As a result of investigation wholeheartedly performed for solving the above problems by the present inventors, it was found that a coating film obtained from a composition including a water-based dispersion, a colloidal inorganic particle and a particular surface active agent had a water contact angle not more than 75 degrees, and developed an effect of providing inconspicuous rain streaks-like fouling of a coating film, resulting in completion of the present invention.

Accordingly, the present invention relates to the following items:
1. A water-based anti-fouling coating composition comprising:
   a water based dispersion (A) which is a silicone-modified acrylic emulsion;
   colloidal inorganic particles (B);
   a sulfosuccinic acid based surface active agent (C) which does not have any radical polymerizable double bond; and
   a surface active agent including an alkylene oxide group (D).
2. The water-based coating composition according to item 1, wherein the water-based dispersion (A) is an acrylic emulsion obtained by emulsion polymerization in the presence of the sulfosuccinic acid based surface active agent (C) and the surface active agent including the alkylene oxide group (D).
3. The water-based coating composition according to any one of item 1 or 2, wherein a coating film obtained by film formation has a water contact angle not more than 75° as measured according to the description.
4. The water-based coating composition according to any one of items 1 to 3, wherein the amount of the colloidal inorganic particles (B) is 0.1 to 95 parts by mass, and the amount of the sulfosuccinic acid based surface active agent (C) is 0.1 to 20 parts by mass, the amount of the surface active agent including the alkylene oxide group (D) is 0.1 to 5 parts by mass, based on 100 parts by mass of the solid resin of the water-based dispersion (A).
5. The water-based coating composition according to any one of items 1 to 4, which is obtained by emulsion polymerization in the presence of a hydrolyzable silane (F).
6. The water-based coating composition according to item 5, wherein the hydrolyzable silane (F) includes a silane represented by a following general formula (a):

   (R¹)ₙ-Si-(R²)₄₋ₙ (a)

   where n is an integer of 0 to 3, R¹ is selected from the group consisting of hydrogen, aliphatic hydrocarbyl group with 1 to 16 carbon atoms, aryl group with 5 to 10 carbon atoms, cycloalkyl group with 5 to 6 carbon atoms, vinyl group, alkylacrylate group with 1 to 10 carbon atoms and alkylmethacrylate group with 1 to 10 carbon atoms; n units of R¹ may be identical or different; R² is selected from alkoxy group with 1 to 8 carbon atoms, acetoxy group or hydroxyl group; and 4-n units of R² may be identical or different.
7. The water-based coating composition according to item 5 or 6, wherein the hydrolyzable silane (F) includes, at a molar ratio of 100/1 to 1/100, in the general formula (a), at least one selected from the group consisting of a silane (I) hazing n = 0, and a silane (II) having n = 1, and
   at least one selected from the group consisting of a silane (III) having n = 2, a silane (IV) having n = 3, a cyclic silane and a linear siloxane having a hydrolyzable group.
8. The water-based coating composition according to any one of items 1 to 7, wherein the colloidal inorganic particles (B) include colloidal inorganic particles coated with an organic polymer.
9. The water-based coating composition according to any one of items 1 to 8, wherein the colloidal inorganic particles (B) are colloidal silica.
10. The water-based coating composition according to any one of items 1 to 9, wherein the surface active agent including the alkylene oxide group (D) is a surface active agent having a radical polymerizable double bond and including the alkylene oxide group.
11. The water-based coating composition according to any one of items 1 to 9, wherein the water-based dispersion (A) is an acrylic emulsion obtained by emulsion polymerization of an ethylenic unsaturated monomer (E) including not less than 5 % by mass of a (meth)acrylic ester having a cycloalkyl group.
12. Use of the water-based coating composition according to any one of items 1 to 11, for coatings.
13. A coating including the water-based coating composition according to any one of items 1 to 11.
14. A coated article coated with the coating according to item 13.
15. An exterior wall material coated with the coating according to item 13.
16. A building coated with the coating according to item 13.
17. An anti-fouling article including a coating formed with the coating according to item 13.
18. A method for coating characterized by using the coating according to item 13.

### BRIEF DESCRIPTION OF THE DRAWING

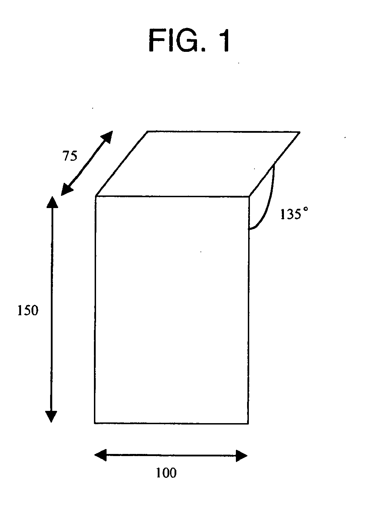

FIG. 1 is schematic view of a shape of an outdoor exposure plate used in Example and Comparative Example.

### BEST MODE FOR CARRYING OUT THE INVENTION

Hereinafter, the present invention will be described in detail.

A method for obtaining a water-based dispersion (A) in the present invention is not especially limited. For example, the method includes a method for obtaining by emulsion polymerization, a method for obtaining by dispersing a polymer obtained by solution polymerization in water, and a method for obtaining by mechanically dispersing a polymer in water. It is preferable to obtain by emulsion polymerization in view of stability of the water-based dispersion and easiness of a manufacturing process.

In the present invention, the water-based dispersion (A) is an acrylic emulsions modified with silicone (SA) with excellent weather resistance.

In the present invention, an acrylic emulsion represents an emulsion of polymer including a structure where an acrylic ester or a methacrylic ester is polymerized.

As ethylenic unsaturated monomer (E) used for manufacture of the acrylic emulsion concerned, acrylic esters and methacrylic esters (in the present application, acrylic acid and or methacrylic acid is collectively expressed as (meth)acrylic acids) may be mentioned. Said monomer that is copolymerizable with the (meth)acrylic esters is not especially limited, but as examples, includes monomers with a carboxylic acid group, methacryl amide monomers and vinylcyanides.

As monomers with a carboxylic group, itaconic acid, fumaric acid, maleic acid, maleic anhydride, maleic acid and monoesters thereof, acrylic acid, methacrylic acid, crotonic acid, etc. may be mentioned.

Examples of (meth)acrylic acid esters include (meth)acrylic acid alkyl ester having alkyl part with 1 to 18 carbon atoms, (meth)acrylic acid hydroxyalkyl ester having alkyl part with 1 to 18 carbon atoms, polyoxy-ethylene (meth)acrylate having a number of ethylene oxide groups of 1 to 100, polyoxy-propylene (meth)acrylate having propylene oxide group with 1 to 100 carbon atoms, polyoxy ethylene di(meth)acrylate having ethylene oxide group with 1 to 100 carbon atoms etc.

Examples of alkyl (meth)acrylates include methyl (meth)acrylate, ethyl (meth)acrylate, n-butyl (meth)acrylate, 2-ethyl hexyl (meth)acrylate, cyclohexyl (meth)acrylate, methylcyclohexyl (meth)acrylate, and dodecyl (meth)acrylate etc.

Examples of hydroxyalkyl (meth)acrylates include 2-hydroxyethyl (meth)acrylate, 2-hydroxypropyl (meth)acryate, and 2-hydroxy cyclohexyl (meth)acrylate, etc.

Examples of (poly) oxy-ethylene (meth)acrylates include ethylene glycol (meth)acrylate, ethylene glycol methoxy (meth)acrylate, diethylene glycol (meth)acrylate, diethylene glycol methoxy (meth)acrylate, tetraethylene glycol (meth)acrylate, and tetraethylene glycol methoxy (meth)acryate etc.

Examples of (poly) oxy-propylene (meth)acrylates include propylene glycol (meth)acrylate, propylene glycol methoxy (meth)acrylate, dipropylene glycol (meth)acrylate, dipropylene glycol methoxy (meth)acrylate, tetrapropylene glycol (meth)acrylate, and tetrapropylene glycol methoxy (meth)acrylate etc.

Examples of (poly) oxy ethylene di(meth)acrylate include ethylene glycol di(meth)acrylate, diethylene glycol di(meth)acrylate, diethylene glycol methoxy (meth)acrylate, and tetraethylene glycol di(meth)acrylate etc.

(Meth)acrylic acid esters are preferably used in an amount of 80% by mass to 100% by mass, and more preferably 90% by mass to 100% by mass with respect, based on the total mass of ethylenic unsaturated monomer (E).

In the present invention, it is particularly preferred for excellent durability that (meth)acrylic acid esters having a cycloalkyl group are contained as ethylenic unsaturated monomer (E). Preferably not less than 5% by mass, more preferably not less than 5% by mass and not more than 99% by mass, and still more preferably not less than 5% by mass and not more than 80% by mass of ethylenic unsaturated monomer (E) is (meth)acrylic acid esters having a cycloalkyl, or mixtures thereof. When (meth)acrylic acid having a cycloalkyl group is not less than 5% by mass, excellent durability is obtained, and when not more than 80%, satisfactory film formation property may be obtained.

As (meth)acrylamide monomers, for example, (meth)acrylamide, N-methylol (meth)acrylamide, and n-butoxy methyl (meth)acrylamide etc. may be mentioned, and as vinylcyanides, for example, (meth)acrylonitrile etc. may be mentioned.

As ethylenic unsaturated monomers having amide group or keto group, acrolein, diacetone acrylamide, diacetone methacryl amide, vinyl methyl ketone, vinyl ethyl ketone, aceto acetoxy ethyl methacrylate, aceto acetoxy ethyl acrylate, formyl styrol, etc., or combination use thereof may be mentioned.

Examples of ethylenic unsaturated monomers (E) other than the above mentioned monomers include for example, olefins, such as ethylene, propylene, and isobutylene; dienes, such as butadiene; haloolefines, such as vinyl chloride and vinylidene chloride; carboxylic vinyl esters such as vinyl acetate, vinyl propionate, vinyl n-butyrate, vinyl benzoate, p-t-butyl vinyl benzoate, vinylpivalate, vinyl 2-ethyl hexanoate, vinyl versatate, vinyl laurate etc; isopropenyl carboxylates, such as isopropenyl acetate and isopropenyl propionate; vinyl ethers, such as ethyl vinyl ether, isobutyl vinyl ether, and cyclohexyl vinyl ether; aromatic vinyl compounds, such as styrene and vinyltoluene; allyl esters, such as allyl acetate and allyl benzoate; allyl ethers, such as allyl ethyl ether, allyl glycidyl ether, and allyl phenyl ether; and furthermore 4-(meth)acryloyl oxy-2,2,6,6-tetra-methyl piperidine, 4-(meth)acryloyl oxy-1,2,2,6,6-pentamethyl piperidine, perfluoro methyl (meth)acrylate, perfluoro propyl (meth)acrylate, perfluoro propyl methyl (meth)acrylate, vinyl pyrrolidone, trimethylol propane tri(meth)acrylate, glycidyl (meth)acrylate, (meth)acrylic acid 2,3-cyclohexene oxide, allyl (meth)acrylate etc. and combination use thereof.

As acrylic emulsion being modified with silicones (SA) of the present invention, as long as it is an emulsion in which compounds having at least one of siloxanes, silicones, silanol groups, or alkoxy silane groups coexist in emulsion particles, any emulsion is preferable.

For example, there may be mentioned:
a water-based emulsion obtained by adding a polymerization catalyst and an acrylate monomer to a siloxane emulsion obtained by dehydration condensation emulsion polymerization of alkoxy silanes and by copolymerizing siloxanes and acrylates under acidic condition as is disclosed in JP-B-51-25369;
a polysiloxane compound polymer particles obtained by making polysiloxane composite by advancing of condensation reaction after making an organic polymer particles absorb alkoxy silanes as is disclosed in JP-A-03-45628;
an ordinary temperature cross-linkable emulsion obtained by emulsion polymerization of an alkyl (meth)acrylate, and polymerizable monomer having an alkoxy silane group at a temperature not more than 60°C using a redox catalyst, at pH 5 to 8, as is disclosed in JP-A-03-227312;
an emulsified copolymer obtained by emulsification copolymerization of a particular organosiloxane, and a particular other copolymerizable vinyl monomers, as is disclosed in JP-A-04-202515;
a water-based topcoat agent obtained by mixing an acrylic ester copolymer emulsion including silicone obtained by emulsion polymerization of a monomer composition consisting of a silicone macromonomer, a (meth)acrylate and a copolymerizable monomer with an acrylic emulsion, as is disclosed in JP-A-05-194911;
a water-based synthetic resin emulsion for durable coatings obtained by emulsion polymerization of a polymerizable monomer including cycloalkyl group, an alkyl (meth)acrylate, and a polymerizable monomer having an alkoxy silane group using a redox catalyst at a temperature not more than 60°C, at pH 5 to 8, as is disclosed in JP-A-06-122734;
a poly silane compound polymer emulsion obtained by polymerizing an alkyl (meth)acrylate and an ethylenic unsaturated monomer in the presence of a poly organosilane polymer emulsion obtained by copolycondensation of an alkoxy silane, cyclosiloxane, and a polymerizable monomer having an alkoxy silane group, and further by carrying out condensation reaction of an alkoxy silane and a cyclosiloxane in the presence of a poly organosilane polymer emulsion obtained by this polymerization, as is disclosed in JP-A-06-157758;
an emulsion obtained by multistage emulsion polymerization of monomer compositions in which a monomer composition in the core portion of emulsion particles consists of a vinyl monomer with a silyl group, a cycloalkyl methacrylate and other non-hydrophilic vinyl monomers and in which a monomer composition in the outermost shell portion of the emulsion consists of a vinyl monomer with a silyl group, a cycloalkyl methacrylate, other non-hydrophilic vinyl monomer, and a hydrophilic vinyl monomer, as is disclosed in JP-A-06-306123.

As the acrylic emulsion being modified with silicones (SA) of present invention, a water-based dispersion (A) is preferably an acrylic emulsion obtained by emulsion polymerization of the ethylenic unsaturated monomer (E) in the presence of the hydrolyzable silane (F). Emulsion polymerization in the presence of the hydrolyzable silane (F) enabled high durability of a coating.

As the hydrolyzable silane (F) used for the acrylic emulsion being modified with silicones (SA) of present invention, it is preferable to include at least one kind selected from silanes having a siloxane structure represented with a following general formula (a).

(R¹)ₙ-Si-(R²)₄₋ₙ (a)

Where n is an integer of 0 to 3, R¹ is selected from the group consisting of hydrogen, aliphatic hydrocarbyl group with 1 to of 16 carbon atoms, aryl group with 5 to 10 carbon atoms of, cycloalkyl group with 5 to 6 carbon atoms, vinyl group, acryloxyalkyl group with 1 to 10 carbon atoms, and methacryloxy alkyl group with 1 to 10 carbon atoms; n of R¹ may be identical or different; R² is selected from alkoxy group with 1 to 8 carbon atoms, acetoxy group or hydroxyl group; and 4-n units of R² may be identical or different.

Especially the hydrolyzable silane (F) preferably includes at least one kind selected from a group consisting of a silane (I) having n = 0, and/or a silane (II) having n = 1, in the general formula (a). In order to obtain satisfactory polymerization stability of the water-based dispersion and fouling prevention effect, the silane (II) having n = 1 is more preferable.

It is preferable that R² of the silane (I) is independently methoxy group, ethoxy group, propoxy group, butoxy group, methoxy ethoxy group, and hydroxyl group, respectively. As preferable examples of the silane (I), tetra-methoxy silane, tetra-ethoxy silane, etc. may be mentioned.

As R¹ of the silane (II), methyl group, phenyl group, vinyl group, and γ-(meth)acryloxy propyl group are preferable, and preferably R² is independently methoxy group, ethoxy group, propoxy group, butoxy group, methoxy ethoxy group, and hydroxyl group, respectively. As preferable examples of silane (II), methyl trimethoxy silane, phenyl trimethoxy silane, methyl triethoxy silane, phenyl triethoxy silane, isobutyl trimethoxy silane, etc. may be mentioned. And as the hydrolyzable silane having radical polymerizable double bond of the silane (II), vinyl ethoxy silane, γ-acryloxy propyl trimethoxy silane, γ-acryloxy propyl triethoxy silane, γ-methacryloxy propyl trimethoxy silane, γ-methacryloxy propyl triethoxy silane, etc. may be mentioned. These may be included singly or in two or more kinds together. A hydrolyzable silane having a radical polymerizable double bond and a hydrolyzable silane without a radical polymerizable double bond may be preferably used together.

Furthermore, when flexibility is required, it is preferable that at least one kind of the hydrolyzable silanes (F) selected from the group consisting cyclic silanes and a silane (III) obtained as n = 2 in the formula (a) is used. Use of cyclic silanes with at least one kind of the silane (II) selected from the group consisting of the silane (III) enables lowering crosslinking density of a silicone polymer formed by the hydrolyzable silane (F), and also enables prevention of complexity in structure of a polymer, which more preferably can give flexibility to a coating provided from a water-based emulsion or an acrylic emulsion. Using in combination with the silane (II) and the silane (III) is especially preferable.

As examples of cyclic silanes, octamethyl cyclo tetra-siloxane, octa phenyl cyclo siloxane, hexa methyl cyclotrisiloxane, decamethyl cyclo penta siloxane, tetra methyl tetravinyl cyclo tetra-siloxane, etc. may be mentioned.

As examples of the silane (III), dimethyl dimethoxy silane, diphenyl dimethoxy silane, dimethyl diethoxysilane, diphenyl diethoxy silane, methyl phenyl silane, and γ-methacryloxy propyl methyl dimethoxy silane may be mentioned. In order to realize a water contact angle not more than 60°, especially diphenyl dimethoxy silane and diphenyl diethoxy silane are preferable.

When both of the silane (I) and/or the silane (II), and at least one kind selected from the group consisting of cyclic silanes and the silane (III) are included in the hydrolyzable silane (F), in order to obtain satisfactory fouling-resistance, a molar ratio of the silane (I) and/or the silane (II) to at least one selected form a group consisting of the cyclic silane and the silane (III) is preferably not less than 10/100, more preferably not less than 35/100, and still more preferably not less than 100/100. Besides, when flexibility is required, use in an amount not more than 100/1 is also possible.

Furthermore, the hydrolyzable silane (F) may also include at least one selected from the group consisting of linear siloxane having hydrolyzable group, alkoxy silane oligomer, and a silane (IV) obtained as n= 3 in the formula (a).

As examples of the silane (IV), triphenyl ethoxy silane, trimethyl methoxy silane, etc. may be mentioned.

As examples of linear siloxanes having hydrolyzable group, compounds represented with following general formula (15), (16), and (17) may be mentioned.

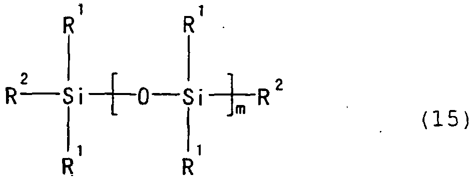

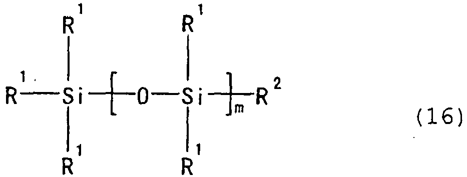

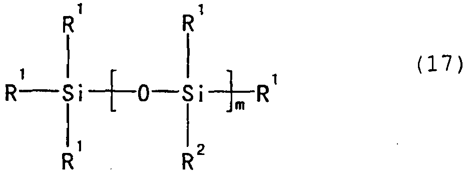

Where R¹ is selected from hydrogen, aliphatic hydrocarbyl with 1 to 16 carbon atoms, aryl with 5 to 10 carbon atoms, cycloalkyl with 5 to 6 carbon atoms, vinyl, acryloxyalkyl with 1 to 10 carbon atoms, or methacryloxyalkyl with 1 to 10 carbon atoms, and each R² is independently selected from alkoxy with 1 to 8 carbon atoms, acetoxy, hydroxyl, epoxy, alkylene oxide, or polyalkylene oxide, respectively, and m represents positive integer of 1 to 999.

As compounds of linear siloxanes and alkoxy silane oligomers represented with the formula (15), (16), and (17), for example, there may be mentioned: KC-89S, KR-500, X-40-9225, KR-217, KR-9218, KR-213, KR-510, X-40-9227, X-40-9247, X-41-1053, X-41-1056, X-41-1805, X-41-1810, X-40-2308, X-22-164A, X-22-164B, X-22-164C, X-22-174DX, X-24-8201, X-22-2426 (manufactured by Shin-Etsu Chemical Co., Ltd.); Silaplane FM-2231, FM-4411, FM-4421, FM-4425, FM-5511, FM-5521, FM-5525, FM-7711, FM-7721, FM-7725, FM-0411, FM-0421, FM-0425, FM-0511, FM-0521, FM-0525, FM-0711, FM-0721, FM-0725 (manufactured by Chisso Corporation); MAC-2101, MAC-2301, FZ-3704, AZ-6200 (manufactured by Nippon Unicar Company Limited); SF8427, SF8428 (manufactured by Dow Corning Toray Silicone Co., Ltd.); SILRES MSE100 (manufactured by Wacker Asahi Kasei Silicone Co., Ltd.) etc.

When the hydrolyzable silane (F) includes both of a the silane (I) and/or the silane (II), and at least one selected from a group consisting of linear siloxanes and the silane (IV) having hydrolyzable group, in order to obtain satisfactory fouling-resistance, a molar ratio of the silane (I) and/or the silane (II) to at least one selected from the group consisting of linear siloxanes and the silane (IV) having hydrolyzable group is preferably not less than 10/100, more preferably not less than 35/100, still more preferably that not less than 100/100. When flexibility is required, it can also be used in an amount of not more than 100/1.

In the silane (III) or the silane (IV), methyl and phenyl are especially preferable as R¹, and methoxy, ethoxy, propoxy, butoxy, methoxy ethoxy, and hydroxyl are especially preferable as R².

The hydrolyzable silane (F) may include chlorosilanes, for example, methyl chlorosilicane, methyl dichlorosilicane, dimethyl dichlorosilicane, trimethyl chlorosilane, phenyl trichlorosilane, diphenyl chlorosilicane, vinyl chlorosilane, γ-(meth) acryloxy propyl trichlorosilane, γ-(meth) acryloxy propyl dichloro methylsilane, in addition to at least one kind selected from the group consisting of the silane (II), cyclic silanes and the silane (III), linear siloxanes, alkoxy silane oligomers, and the silane (IV).

Existence of the silane condensates can be known by ²⁹SiNMR (²⁹Si nuclear magnetic resonance spectrum) or ¹HNMR (proton nuclear magnetic resonance spectrum). For example, condensates of the silane (II) can be identified because chemical shift of ²⁹SiNMR represents peak at -40 to -80 ppm. Since chemical shift of ²⁹SiNMR represents peak at -16 to -26 ppm, the silane (IV) or condensates of cyclic silanes can be identified.

In the present invention, the hydrolyzable silane (F) can be used in an amount of 0.01% by mass to 300% by mass to total mass of the ethylenic unsaturated monomer (E).

As the colloidal inorganic particles (B) in the present invention, colloidal silica is preferable because of easy availability and low price. Colloidal silica prepared by a sol-gel method can also be used, and commercially available product can also be used. In the case of preparation of a colloidal silica by a sol-gel method, Werner Stober et al; J. Colloid and Interface Sci., 26, 62-69 (1968), Rickey D. Badley et al; Langmuir 6, 792-801 (1990), Journal of Japan Society of Colour Material 61 [9] 488-493 (1988) etc. may be referred to. Colloidal silica is a dispersion in water or a water-soluble solvent of silica having silicon dioxide as a fundamental unit, a mean particle diameter thereof is preferably 5 to 120 nm, and more preferably 10 to 80 nm. A particle diameter of not less than 5 nm can give satisfactory storage stability of coating, and a particle diameter of not more than 120 nm can give excellent water whitening resistance. Colloidal silica having particle diameters of the above-mentioned range has no preference of acidic or basic in a state of water-based dispersion, and may appropriately be selected according to a stable area of the water-based dispersion (A) to be mixed. As commercially available acidic colloidal silica having water as a dispersion medium, for example, Snowtex (trademark)-O, Snowtex-OL (manufactured by Nissan Chemical Industries, Ltd.); ADELITE (trademark) AT-20Q (manufactured by Asahi Denka Kogyo K.K.); Crebosol (trademark) 20H12 and Crebosol 30CAL25 (manufactured by Clariant (Japan) K.K.) etc. may be used.

As basic colloidal silica, for example, silica stabilized by addition of alkali metal ions, ammonium ion, and amines may be mentioned, and there may be mentioned: Snowtex-20, Snowtex-30, Snowtex-C, Snowtex C30, Snowtex-CM40, Snowtex-N, Snowtex-N30, Snowtex-K, Snowtex-XL, Snowtex-YL, Snowtex-ZL, Snowtex PS-M, Snowtex PS-L etc. (manufactured by Nissan Chemical Industries, Ltd.); ADELITE AT-20, ADELITE AT-30, ADELITE AT-20N, ADELITE AT-30N, ADELITE AT-20A, ADELITE AT-30A, ADELITE AT-40, ADELITE AT-50, etc. (manufactured by Asahi Denka Kogyo K.K.); Crebosol 30R9, Crebosol 30R50, Crebosol 50R50, etc. (manufactured by Clariant (Japan) K.K.); LUDOX (trademark) HS-40, LUDOX HS-30, LUDOX LS, LUDOX SM-30, etc. (manufactured by E. I. duPont de Nemours& Co.) etc.

As colloidal silica having water-soluble solvent as a dispersion medium, for example, there may be mentioned: MA-ST-M (methanol dispersion type having particle diameters of 20 to 25 nm), IPA-ST (isopropyl alcohol dispersion type having particle diameters of 10 to 15 nm), EG-ST (ethylene glycol dispersion type having particle diameters of 10 to 15 nm), EG-ST-ZL (ethylene glycol dispersion type having particle diameters of 70 to 100 nm), NPC-ST (ethylene glycol mono-propyl ether dispersion type having particle diameter of 10 to 15 nm) (manufactured by Nissan Chemical Industries, Ltd.) etc.

One kind or two kinds or more of these colloidal silica may be combined, and alumina, sodium aluminate, etc. may be included as a component in small quantities. The colloidal silica may include inorganic bases (sodium hydroxide, potassium hydroxide, lithium hydroxide, ammonia, etc.) and organic bases (tetramethyl ammonium etc.) as a stabilizer.

Moreover, as the colloidal inorganic particles (B), inorganic compounds giving colloidal particles other than silica may be used, and as examples of the inorganic compounds, there may be mentioned: in addition to semiconductors having photocatalysis, such as TiO₂, TiO₃, SrTiO₃, FeTiO₃, WO₃, SnO₂, Bi₂O₃, In₂O₃, ZnO, Fe₂O₃, RuO₂, CdO, CdS, CdSe, GaP, GaAs, CdFeO₃, MoS₂, LaRhO₃, GaN, CdP, ZnS, ZnSe, ZnTe, Nb₂O₅, ZrO₂, InP, GaAsP, InGaAlP, AlGaAs, PbS, InAs, PbSe, InSb; Al₂O₃, AlGa, As, Al(OH)₃, Sb₂O₅, Si₃N₄, Sn-In₂O₃, Sb-In₂O₃, MgF, CeF₃, CeO₂, 3Al₂O₃·2SiO₂, BeO, SiC, AlN, Fe, Co, Co-FeOX, CrO₂, Fe₄N, BaTiO₃, BaO-Al₂O₃-SiO₂, Ba ferrite, SmCO₅, YCO₅, CeCO₅PrCO₅, Sm₂CO₁₇, Nd₂Fe₁₄B, Al₄O₃, α-Si, SiN₄, CoO, Sb-SnO₂, Sb₂O₅, Mno₂, MnB, Co₃O₄, Co₃B, LiTaO₃, MgO, MgAl₂O₄, BeAl₂O₄, ZrSiO₄, ZnSb, PbTe, GeSi, FeSi₂, CrSi₂, CoSi₂, MnSi_{1.73}, Mg₂Si, β-B, BaC, BP, BaC, BP, TiB₂, ZrB₂, HfB₂, Ru₂Si₃, TiO₂ (rutile type), TiO₃, PbTiO₃, Al₂TiO₅, Zn₂SiO₄, Zr₂SiO₄, 2MgO₂-AlO₂-5SiO₂, Nb₂O₅, Li₂ O-Al₂O₃-4SiO₂, Mg ferrite, Ni ferrite, Ni-Zn ferrite, Li ferrite, Sr ferrite, etc. One kind or two kinds or more of these colloidal inorganic particles may be blended to be used.

Colloidal inorganic particles coated with organic polymers are not especially limited, and preferably used are, for example: particles obtained by emulsion polymerization, in the presence of a colloidal silica, of an ethylenic unsaturated monomer, and a hydrolyzable silane having a radical polymerizable double bond (for example, disclosed in JP-A-59-71316); particles obtained by emulsion polymerization, in the presence of a colloidal silica, of an ethylenic unsaturated monomer and an anionic polymerizable monomer (for example, disclosed in JP-A-59-217702); particles obtained by making water soluble polymer compound to be absorbed to inorganic particles, and subsequently by coating with a polymer of radical polymerizable monomer (for example, disclosed in JP-A-60-58237); particles obtained by emulsion polymerization, in the presence of a colloidal silica, of an ethylenic unsaturated monomer, and an ethylenic unsaturated monomer having a hydroxyl group (for example, disclosed in JP-A-06-199917); particles having a core/shell structure obtained in a way that an organic macromolecule, and silica and/or colloidal silica not covalent-bonded with the organic macromolecule are arranged into a core, the organic macromolecule is arranged in the shell, a three dimensional cross-linking network structure and/or IPN structure are formed between the core organic macromolecule and the shell organic macromolecule, and thereby the silica and/or the colloidal silica in the core are physicochemically held in the particles without covalent bond (for example, disclosed in JP-A-08-290912); particles obtained by emulsion polymerization of an ethylenic unsaturated compound in the presence of a colloidal silica, an active agent, and water (for example, disclosed in JP-A-11-1893); particles having a vinyl polymer bonded to a colloidal silica particle surface via a cationic residue (for example, disclosed in JP-A-11-209622); particles having vinyl polymer bonded to an inorganic or organic particle surface directly or via a nonionic surface active agent (for example, disclosed in JP-A-2000-290464); and colloidal micro-particles having a nonionic surface active agent deposited by agglomeration or aggregation onto a surface of an inorganic or organic particle (for example, disclosed in JP-A-2001-335721).

In the present invention, the colloidal inorganic particles (B) is preferably used in an amount of 0.1 to 95 parts by mass based on 100 parts by mass of the solid resin of the water-based dispersion (A), more preferably 0.1 to 50 parts by mass, and still more preferably 0.5 to 20 parts by mass.

In the present invention, as the sulfosuccinic acid based surface active agent (C), for example, sulfosuccinic acid based compounds represented with following formula (1) may be mentioned.

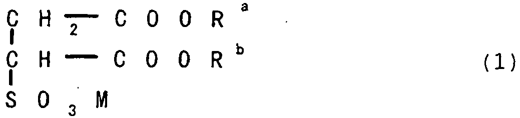

Where, R^{a} and R^{b} may be identical or different, and may be hydrogen, alkyl with 1 to 20 carbon atoms, alkenyl with 1 to 20 carbon atoms, cycloalkyl with 5 to 12 carbon atoms, aryl with 5 to 10 carbon atoms, hydrocarboyl, such as aralkyl with 6 to 19 carbon atoms, or group partially subsutituted by hydroxyl, carboxylic, etc. or organic group including alkylene oxide compounds, such as polyoxyalkylene alkyl ether (alkyl portion with 2 to 4 carbon atoms), and polyoxyalkylene alkyl phenyl ether (alkyl portion with 0 to 20 carbon atoms, alkylene portion with 2 to 4 carbon atoms), or alkaline metal, ammonium, organic amino base, or organic quaternary ammonium base; and M is alkaline metal, ammonium, organic amino base, or organic quaternary ammonium base.

Furthermore in detail, in compounds represented with the formula (1), compounds in which R^{a} and/or R^{b} are represented with following formula (2), (3), or (4) may be mentioned.

-(A0)ₙ-R²¹ (2)

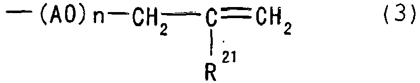

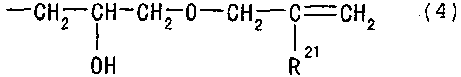

In each of the formula (2), (3), and (4), R²¹ is alkyl with 1 to 20 carbon atoms, alkenyl with 1 to 20 carbon atoms, cycloalkyl with 5 to 12 carbon atoms, aryl with 5 to 10 carbon atoms, hydrocarbyl such as aralkyl with 6 to 19 carbon atoms, or group partially subsutituted by hydroxyl, carboxylic, etc. or organic group including alkylene oxide compounds, such as polyoxyalkylene alkyl ether group (alkyl portion with 2 to 4 carbon atoms), and polyoxyalkylene alkyl phenyl ether group (alkyl portion with 0 to 20 carbon atoms, and alkylene portion with 2 to 4 carbon atoms), and A is alkylene or substituted alkylene with 2 to 4 carbon atoms, n is an integer of 0 to 200, R²² is hydrogen or methyl.

In compounds represented with the general formula (1) in the present invention, for example as a sulfosuccinic acid based surface active agent which does not have any radical polymerizable double bond, there may be mentioned: dioctyl sodium sulfosuccinate (Pelex (trademark) OT-P manufactured by Kao Corp., or Aerosol (trademark) OT-75 manufactured by Mitsui Cytec Inc. etc.), dihexyl sodium sulfo succinate (Aerosol (trademark) MA-80 manufactured by Mitsui Cytec Inc. etc.), Aerosol (trademark) TR-70, A-196-85, AY-100, IB-45, A-102, and A-103, 501, etc. manufactured by Mitsui Cytec Inc. As sulfosuccinic acid based surface active agent having radical polymerizable double bond, Eleminol (trademark) JS-2, JS-5, manufactured by Sanyo Chemical Industries, Ltd., and LATEMUL (trademark) S-120, S-180, S-180A manufactured by Kao Corp. may be mentioned. Among them, in view of lowering a water contact angle of a coating, sulfosuccinic acid based surface active agents without radical polymerizable double bond are preferable.

In the present invention, the sulfosuccinic acid based surface active agent (C) is used in an amount of 0.1 to 20 parts by mass based on 100 parts by mass of the solid resin of the water-based dispersion (A), preferably 0.5 to 10 parts by mass, and more preferably 1.0 to 5 parts by mass. Use in this range enables formation of a film with satisfactory water resistance.

In the present invention, the surface active agents including alkylene oxide group (D) do not include (C) in a structure thereof, but include anionic surface active agents with a radical polymerizable double bond including an alkylene oxide group, anionic surface active agents without a radical polymerizable double bond including an alkylene oxide group, nonionic surface active agents with a radical polymerizable double bond including an alkylene oxide group, and nonionic surface active agents without a radical polymerizable double bond including an alkylene oxide group.

In the present invention, as the anionic surface active agents including alkylene oxide group (D), compounds represented with a following formula (5) and (6) may be mentioned.

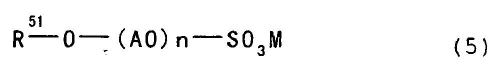

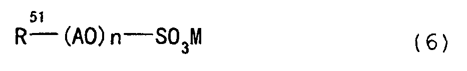

In the formula (5) and (6), R⁵¹ is hydrocarbyl, such as alkyl with 1 to 20 carbon atoms, alkenyl with 1 to 20 carbon atoms, cycloalkyl with 5 to 12 carbon atoms, aralkyl with 6 to 19 carbon atoms, or hydrocarbyl partially substituted with hydroxyl, carboxylic, etc.; or organic group including alkylene oxide compounds such as polyoxyethylene alkyl ether group (alkyl portion with 0 to 20 carbon atoms, and alkylene with 2 to 4 carbon atoms) and polyoxyalkylene alkyl phenyl ether group (alkyl portion with 0 to 20 carbon atoms, and alkylene portion with 2 to 4 carbon atoms.) A is alkylene with 2 to 4 carbon atoms, or partially substituted alkylene, n is an integer of 0 to 200, and M is ammonium, sodium, potassium.

In the present invention, as the anionic surface active agent having a radical polymerizable double bond including an alkylene oxide group (D), compounds represented with a following formula (7), (8), and (9) may be mentioned.

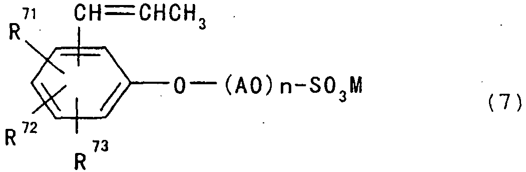

Where, R⁷¹ is alkyl with 6 to 18 carbon atoms, alkenyl or aralkyl; R⁷² is hydrogen, alkyl with 6 to 18 carbon atoms, alkenyl or aralkyl; R⁷³ is hydrogen or propenyl; A is alkylene with 2 to 4 carbon atoms, or partially substituted alkylene; n is an integer of 1 to 200; M is ammonium, sodium, or potassium.

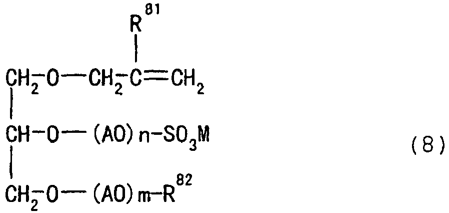

Where, R⁸¹ is hydrogen or methyl, R⁸² is alkyl or acyl with 8 to 24 carbon atoms, A is alkylene with 2 to 4 carbon atoms, n is an integer of 0 to 50, m is an integer of 0 to 20, M is ammonium, sodium, or potassium.

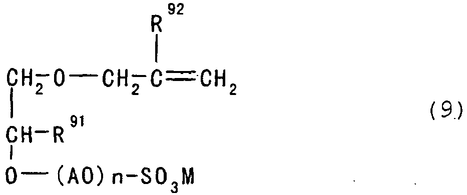

Where, R⁹¹ is alkyl with 8 to 30 carbon atoms, R⁹² hydrogen or methyl, A is alkylene or substituted alkylene with 2 to 4 carbon atoms, n is an integer of 0, or 1 to 200, M is ammonium, sodium, potassium, or alkanolamine residue.)

As alkylphenol ether based compounds represented with the formula (7), for example, Aquaron (trademark) HS-10 etc. manufactured by Dai-Ichi Kogyo Seiyaku Co., Ltd. may be mentioned, as compounds represented with the formula (8), for example, ADEKA Rearsoap (trademark) SE-1025A, SR-1025A, SR-10N, SR-20N manufactured by Asahi Denka Kogyo K.K. etc. may be mentioned, and as compounds represented with the formula (9), for example, Aquaron (trademark) KH-5, KH-10 manufactured by Dai-Ichi Kogyo Seiyaku Co., Ltd. etc. may be mentioned. In addition as anionic surface active agents having radical polymerizable double bond including alkylene oxide group, for example, Antox (trademark)-MS-60, manufactured by Nippon Nyukazai Co., Ltd., etc., LATEMUL PD-101, PD-104, manufactured by Kao Corp. make, etc., ELEMINOL (trademark) RS-30, manufactured by Sanyo Chemical Industries, Ltd., etc. may be mentioned.

In the present invention, as the nonionic surface active agent including alkylene oxide group (D), compounds represented with following formula (10) and (11) may be mentioned.

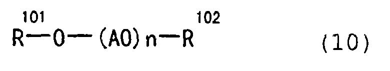

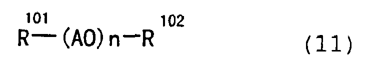

In the formula (10) and (11), R¹⁰¹ is hydrocarbyl such as alkyl with 1 to 20 carbon atoms, alkenyl with 1 to 20 carbon atoms, cycloalkyl with 5 to 12 carbon atoms, aralkyl with 6 to 19 carbon atoms, or hydrocarbyl partially substituted with hydroxyl, carboxylic acid, etc.; or organic groups including alkylene oxide compounds such as polyoxyethylene alkyl ether group (alkyl portion with 0 to 20 carbon atoms, and alkylene portion with 2 to 4 carbon atoms), polyoxyalkylene alkyl phenyl ether group (alkyl portion with 0 to 20 carbon atoms, and alkylene portion with 2 to 4 carbon atoms) etc. A is alkylene with 2 to 4 carbon atoms or partially substituted alkylene, n is an integer of 0 to 200, and R¹⁰² is hydrogen or methyl.

As the nonionic surface active agents having radical polymerizable double bond including alkylene oxide group (D) in the present invention, compounds represented with following formula (12), (13), and (14) may be mentioned.

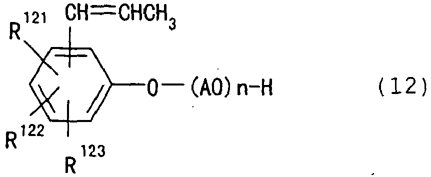

Where, R¹²¹ is alkyl, alkenyl, or aralkyl with 6 to 18 carbon atoms, R¹²² is hydrogen, alkyl, alkenyl, or aralkyl with 6 to 18 carbon atoms, R¹²³ is hydrogen or propenyl, A is alkylene with 2 to 4 carbon atoms or partially substituted alkylene, and n is an integer of 1 to 200.

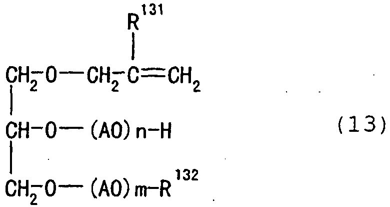

Where, R¹³¹ is hydrogen or methyl, R¹³² is alkyl or acyl with 8 to 24 carbon atoms, A is alkylene with 2 to 4 carbon atoms, n is an integer of 0 to 100, and m is an integer of 0 to 50.

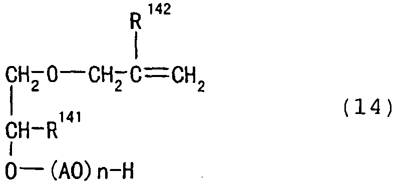

Where, R¹⁴¹ is alkyl with 8 to 30 carbon atoms, R¹⁴² is hydrogen or methyl, A is alkylene with 2 to 4 carbon atoms or substituted alkylene, and n is an integer of 0, or 1 to 200.

As compounds represented with the formula (12), for example, Aquaron (trademark) RN-10, RN-20, RN-30, RN-50, manufactured by Dai-Ichi Kogyo Seiyaku Co., Ltd. etc. may be mentioned. As compounds represented with the formula (13), for example, ADEKA Rearsoap (trademark) NE-20, NE-30, NE-40, ER-10, ER-20, ER-30, ER-40, manufactured by Asahi Denka Kogyo K.K. etc. may be mentioned.

As the surface active agents including alkylene oxide group (D) in the present invention, surface active agents having radical polymerizable double bond including alkylene oxide group is preferable, and anionic surface active agents having radical polymerizable double bond including alkylene oxide group is still more preferable in order to obtain a film having satisfactory polymerization stability and satisfactory water resistance.

Although an amount of the surface active agent including alkylene oxide group (D) to be used is not especially limited in the present invention, a smaller amount to be used is preferable in order to obtain film with satisfactory water resistance, and use in an amount of 0.1 to 5% by mass based on 100% by mass of the solid resin of the water-based dispersion (A) is possible.

As surface active agents used for emulsion polymerization in the present invention, in addition to the sulfosuccinic acid based surface active agent (C) and the surface active agent including alkylene oxide group (D) there may be mentioned: p-sodium styrene sulfonate, p-potassium styrene sulfonate, acrylic acid-(2-sulfoethyl) ester sodium, acrylic acid-(2-sulfoethyl) ester potassium, methacrylic acid-(2-sulfoethyl) ester sodium, acrylic acid-(3-sulfopropyl) ester potassium, methacrylic acid-(3-sulfopropyl) ester sodium, fatty acid soaps, alkyl sulfonic acid salts, alkyl sulfo succinates, polyoxyethylene sorbitan fatty acid esters, oxyethyleneoxypropylene block copolymers etc.

In the present invention, an order of mixing of water-based dispersion (A), colloidal inorganic particles and/or the colloidal inorganic particles coated with organic polymer (B), the sulfosuccinic acid based surface active agent (C), and the surface active agent including alkylene oxide group (D) is not especially limited, and as a method of mixing (A), (B), (C) and (D), specifically there may be mentioned: a method to mix (B), (C) and (D) in this order with (A); a method to mix (B), (D) and (C) in this order with (A); a method to mix (C), (B) and (D) in this order with (A); a method to mix (C), (D) and (B) in this order with (A); a method to mix (D), (B) and (C) in this order with (A); a method to mix (D), (C) and (B) in this order with (A); a method to mix a mixture of (B) and (C) with (A) and subsequently mix (D); a method to mix (D) with (A) and subsequently mix a mixture of (B) and (C) ; a method mix a mixture of (B) and (D) with (A) and subsequently mix (C); a method to mix (C) with (A), and subsequently mix a mixture of (B) and (D) ; a method to mix a mixture of (C) and (D) with (A) and subsequently mix (B); a method to mix (B) with (A) and subsequently mix a mixture of (C) and (D); and a method to mix a mixture of (B), (C) and (D) with (A).

As examples of using (C) and/or (D) when manufacturing (A), a method to use (C) and/or (D) in manufacturing of (A) and subsequently mix (B); a method to use (C) and/or (D) in manufacturing of (A) and subsequently mix (B) and (C) (in this case both of (C) may be identical or different); a method to use (C) and/or (D) in manufacturing of (A) and subsequently mix (B) and (D) (in this case both of (D) may be identical or different); a method to use (C) and/or (D) in manufacturing of (A) and subsequently mix (B), (C) and (D), (in this case (C) and (D) may be identical or different); When mixing, mixing may be carried out at room temperatures or heated mixing may be carried out at temperatures having 90°C as a maximum.

In the present invention, a solids content of the colloidal inorganic particles (B) based on 100 parts by mass of the solid resin of the water-based dispersion (A) is preferably 0.1 to 95 parts by mass, more preferably 0.1 to 50 parts by mass, and still more preferably 0.5 to 20 parts by mass. When the amount of the colloidal inorganic particles (B) falls within the range, the obtained coating results in excellent water resistance and excellent fouling resistance so as not to cause rain streak-like fouling.

In the present invention, the sulfosuccinic acid based surface active agent (C) based on 100 parts by mass of the solid resin of the water-based dispersion (A) is preferably 0.1 to 20 parts by mass, more preferably 0.5 to 10 parts by mass, and still more preferably 1.0 to 5 parts by mass. When the amount of the sulfosuccinic acid based surface active agent (C) falls within the range, the obtained coating results in excellent water resistance and excellent fouling resistance so as not to cause rain streaks-like fouling. A paint for coating has an excellent storage stability.

In the present invention, in mixing or predispersion of a coating pigment, following surface active agents may be used together as occasion demands, in addition to the sulfosuccinic acid based surface active agent (C), the surface active agent including alkylene oxide group (D), and other surface active agent that may be added at the time of polymerization. For example, sodium salt, potassium salt, or ammonium salt of hexa metaphosphoric acid, sodium salt, potassium salt, or ammonium salt of tri polyphosphoric acid, sodium salt, potassium salt, or ammonium salt of polymers having carboxylic acid groups, such as polyacrylic acid, in addition, for example, anionic surface active agents represented by salts, such as sulfonated castor oil, higher fatty acids, resin acids, acidic higher alcohols, sulfates, high alkyl sulfonic acids, alkyl sulfonate allyl, or nonionic surface active agents represented by publicly known reaction product as ethylene oxide and long chain fatty alcohols or phenols and phosphoric acids, and cationic surface active agents including quaternary ammonium salts etc. may be mentioned.

In the present invention, it is preferable that the ethylenic unsaturated monomer (E) and the sulfosuccinic acid based surface active agent (C), and/or the surface active agent including alkylene oxide group (D) are mixed to obtain a pre-emulsified liquid, and after mixing the pre-emulsified liquid and the hydrolyzable silane (F), it is added into a reaction system being polymerized in an aqueous medium continuously or intermittently.

In the present invention, a pre-emulsified liquid consisting of the ethylenic unsaturated monomer (E) and the sulfosuccinic acid based surface active agent (C), and/or the surface active agent including alkylene oxide group (D) is preferably pre-emulsified with an agitator that can give high shear power, such as homogenizers. Moreover, the pre-emulsified liquid can be optionally obtained with water and a polymerization initiator.

In the present invention, it is obtained by emulsion-polymerized in the water medium, after emulsifying the ethylenic unsaturated monomer (E) and the sulfosuccinic acid based surface active agent (C), and/or the surface active agent including alkylene oxide group (D), while mixing the pre-emulsified liquid and the hydrolyzable silane (F) continuously or intermittently. It is necessary that the mixture is gradually added continuously or intermittently to a reaction system being polymerized.

In the present invention, mixing continuously or intermittently the pre-emulsified liquid and the hydrolyzable silane (F) means that both of them are gradually added within not more than one minute, preferably not more than 30 seconds, and more preferably 10 seconds, after-mixing into a reaction system being polymerization, or that most preferably, after both are mixed just before being added into the reaction system, the mixture is consecutively added continuously or intermittently into the reaction system being polymerized.

In mixing of the pre-emulsified liquid and the hydrolyzable silane (F), emulsification under agitation with a high shear power applied by a high velocity revolution using a homogenizer etc. will hydrolyze the hydrolyzable silane (F) and will destroy emulsification state of an emulsified liquid caused by generation of alcohol etc. Therefore, a mixing method of the pre-emulsified liquid and the hydrolyzable silane (F) requires gentle agitation, specifically the hydrolyzable silane (F) should be maintained in an emulsification state having a mean particle diameter of not less than 10 µm, and preferably the hydrolyzable silane (F) should be maintained in an emulsified state of having a mean particle diameter of not less than 100 µm that can be visually observed in a mixture.

In the present invention, as examples for method for mixing include a static mixer N10 series, N16 series, N60 series (product name, made by NORITAKE Co., Limited), or a method to fill an exit terminal of Y character pipe with metal network, Raschig ring, or zeolite. As in-line mixers, 125L, 275L (product name, made by Silverson Machines, Inc.), T.K. Pipeline homomixer (product name, made by Tokushu Kika Kogyo Co., Ltd.), T.K., agitators, such as Homomik line mixer (product name, made by Tokushu Kika Kogyo Co., Ltd.), may be mentioned, and when using, it is also possible to use them at suppressed agitating number of rotations. Temperatures of mixing are not more than 60°C, preferably not more than 50°C, and more preferably not more than 40°C. When the above-mentioned conditions are not satisfied, acidity or basicity of a radical polymerizable monomer emulsified liquid hydrolyzes much hydrolyzable silanes, and destroys pre-emulsified liquid, leading to separation into a monomer layer part and a water layer part of the pre-emulsified liquid. As a result, many aggregates will be formed in the reaction system under polymerization.

An emulsion concerning the present invention is obtained by performing simultaneously an emulsion polymerization that is emulsion polymerization by radical polymerization of a radical polymerizable monomer, and an emulsion polymerization by hydrolysis and condensation reaction of a hydrolyzable silane in an aqueous medium. Water is mostly used as an aqueous medium here, and a solvent soluble in water, such as lower alcohol with 1 to 3 carbon atoms, or acetone added in water may be included. Here, an amount of solvents other than water to be added is preferably not more than 20% in the emulsion.

In emulsion polymerization of the ethylenic unsaturated monomer (E) in the presence of the hydrolyzable silane (F), hydrogen ion concentration (pH) of the emulsion polymerization system under emulsion polymerization is preferably not more than pH 4.0, and more preferably not less than pH 1.5 and not more than 3.5. Emulsion polymerization in pH not more than the maximum promotes condensation reaction of the hydrolyzable silane, and does not advance condensation reaction after emulsion polymerization, and therefore storage stability as a product improves.

In emulsion polymerization, as radical polymerization catalysts, water soluble or oil soluble persulfates, peroxides, azobis compounds, etc. may advantageously be used, and thus addition polymerization of the ethylenic unsaturated monomer can occur by decomposition of the radical with heat or reductive materials. As the examples, potassium persulfate, sodium persulfate, ammonium persulfate, hydrogen peroxide, t-butyl hydroperoxide, t-butyl peroxy benzoate, 2,2-azobisisobutyronitril, 2,2-azobis(2-diamino propane) hydrochloride, and 2,2-azobis(2,4-dimethyl valeronitrile) etc. may be mentioned, and potassium persulfate, sodium persulfate, and ammonium persulfate having also effects as catalysts for promoting hydrolysis reaction and condensation reaction of hydrolyzable silanes may preferably be used. An amount of the radical polymerization catalyst is usually 0.05% by mass to 1% by mass based on the total mass of the ethylenic unsaturated monomer (E).

Usually, polymerization reaction is preferably performed under conditions of ordinary pressure and polymerization temperatures of 65 to 90°C, and may be carried out also at higher pressures according to characteristics, such as a vapor pressure at polymerization temperature of the monomer. Polymerization time is a time required for adding raw materials (addition time) plus an aging (cooking) time after introduction. In simultaneous addition of various raw materials into a reaction system, the addition time is usually several minutes. In case of sequential addition of various raw materials into the reaction system, although dependent on a polymer concentration in emulsion finally obtained, it is usually not less than 10 minutes, since the gradual addition to the reaction system must be performed in a range wherein generated heat by polymerization can be removed. The cooking time after the addition is at least not less than 10 minutes. Polymerization time of less than the above-mentioned range may possibility make each raw material remained or may make the hydrolyzable silane remained without condensation as hydrolysate.

When acceleration of rate of polymerization and polymerization at low temperatures of not more than 70°C are desired, for example reducing agents, such as sodium bisulfite, ferrous chloride, ascorbic acid salt, and rongalite, may advantageously be used in combination with radical polymerization catalysts. Furthermore in order to adjust molecular weights, it is also possible to add chain transfer agents, such as dodecyl mercaptan, optionally.

In emulsion polymerization using hydrolyzable silanes, as curing catalyst at the time of film formation after emulsion polymerization, for example, metal salts of organic acids, such as dibutyl tin dilaurate, dioctyl tin dilaurate, dibutyl tin diacetate, tin octylate, tin laurate, iron octylate , lead octylate, and tetra-butyl titanate; and amine compounds, such as n-hexylamine, 1,8-diazabicyclo [5,4,0]-7-undecene may be added into emulsion concerning the present invention. Besides, when these catalysts for curing are not water soluble, it is desirable to emulsify those using surface active agents and water in use.

In an emulsion concerning the present invention, a mean particle diameter of dispersoid is preferably 10 to 1000 nm.

Nonvolatile matter of the emulsion concerning the present invention is preferably 20 to 70% by mass, and more preferable 30 to 65% by mass.

In order to maintain long-term dispersion stability of emulsion, a water-based anti-fouling coating composition of the present invention is preferably adjusted in a range of pH 5 to 10 using basic substances, for example basic organic compounds including amines, such as ammonia and dimethylamino ethanol, or basic inorganic compounds including alkali metal salts, such as sodium hydroxide and potasium hydroxide, etc.

In addition, components usually added into water-based coatings, for example, thickeners, coalescing agents, plasticizers, antifreezing agents, defoaming agents, dyes, antiseptics, ultraviolet absorbers, light stabilizers, etc. may optionally be blended to the water-based anti-fouling coating composition of the present invention.

Specifically, as thickeners, macromolecular dispersion stabilizers, such as polyvinyl alcohols (partially saponified polyvinyl acetates etc. included), methyl cellulose, hydroxyethyl cellulose, and polyvinyl pyrrolidone etc., and polyether, polycarboxylic acid thickeners, etc. may be mentioned.

Specifically, as coalescing agents, there may be mentioned: diethylene glycol monobutyl ether, ethylene glycol monobutyl ether, diethylene glycol diethyl ether, diethylene glycol dibutyl ether, ethylene glycol mono2-ethyl hexyl ether, 2,2,4-trimethyl-1,3-butanediol isobutylate, glutaric acid diisopropyl, propylene glycol n-butyl ether, dipropylene glycol n-butyl ether, tri propylene glycol n-butyl ether, dipropylene glycol methyl ether, tripropylene glycol methyl ether, etc. These coalescing agents may optionally be singularly blended, or may be blended in combination.

Specifically, as plasticizers, dibutyl phthalate, dioctyl phthalate, etc. may be mentioned.

Specifically, as antifreezing agents, propylene glycol, ethylene glycol, etc. may be mentioned.

Ultraviolet absorbers include benzophenone based, benzotriazol based, and triazine based. As benzophenone based ultraviolet absorbers, specifically, 2,4-dihydroxybenzophenone, 2-hydroxy-4-methoxybenzophenone, 2-hydroxy-4-methoxybenzophenone-5-sulfonic acid, 2-hydroxy-4-n-octoxybenzophenone, 2-hydroxy-4-n-dodecyloxybenzophenone, 2-hydroxy-4-benzyloxybenzophenone, bis(5-benzoyl-4-hydroxy-2-methoxyphenyl)methane, 2,2'-dihydroxy-4-methoxybenzophenone, 2,2'-dihydroxy-4,4'-dimethoxybenzophenone, 2,2',4,4'-tetra-hydroxybenzophenone, 4-dodecyloxy-2-hydroxybenzophenone, 2-hydroxy-4-methoxy-2'-carboxybenzophenone, 2-hydroxy-4-stearyloxybenzophenone, etc. may be mentioned.

As radical polymerizable benzophenone based ultraviolet absorbers, specifically 2-hydroxy-4-acryloxybenzophenone, 2-hydroxy-4-methacryloxybenzophenone, 2-hydroxy-5-acryloxybenzophenone, 2-hydroxy-5-methacryloxybenzophenone, 2-hydroxy-4-(acryloxy-ethoxy)benzophenone, 2-hydroxy-4-(methacryloxy-ethoxy)benzophenone, 2-hydroxy-4-(methacryloxy-diethoxy)benzophenone, 2-hydroxy-4-(acryloxy-triethoxy)benzophenone, etc. may be mentioned.

As benzotriazol based ultraviolet absorbers, specifically there may be mentioned: 2-(2'-hydroxy-5'-methylphenyl)benzotriazol, 2-(2'-hydroxy-5'-tert-butylphenyl)benzotriazol, 2-(2'-hydroxy-3',5'-di-tert-butylphenyl)benzotriazol, 2-(2-hydroxy-5-tert-octylphenyl)benzotriazol, 2-(2-hydroxy-3,5-di-tert-octylphenyl)benzotriazol, 2-(2'-hydroxy-3',5'-bis(α,α'-dimethylbenzyl)phenyl)benzotriazol, a condensate of methyl-3-(3-tert-butyl-5-(2H-benzotriazol-2-yl)-4-hydroxyphenyl)propionate and polyethylene glycol (molecular weight 300) (manufactured by Ciba-Geigy Japan Limited, product name: TINUVIN 1130), isooctyl-3-(3-(2H-benzotriazol-2-yl)-5-tert-butyl-4-hydroxyphenyl)propionate (manufactured by Ciba-Geigy Japan Limited, product name: TINUVIN 384), 2-(3-dodecyl-5-methyl-2-hydroxyphenyl)benzotriazol (manufactured by Ciba-Geigy Japan Limited, product name: TINUVIN 571), 2-(2'-hydroxy-3'-tert-butyl-5'-methylphenyl)-5-chlorobenzotriazol, 2-(2'-hydroxy-3',5'-di-tert-amylphenyl)benzotriazol, 2-(2'-hydroxy-4'-octoxyphenyl)benzotriazol, 2-(2'-hydroxy-3'-(3'',4'',5'',6''-tetra-hydrophthalimidomethyl)-5'-methylphenyl) benzotriazol, 2,2-methylene bis(4-(1,1,3,3-tetramethylbutyl)-6-(2H-benzotriazol-2-yl)phenol), 2-(2H-benzotriazol-2-yl)-4,6-bis(1-methyl-1-phenyl ethyl)phenol (manufactured by Ciba-Geigy Japan Limited, product name: TINUVIN 900).

As radical polymerizable benzotriazol based ultraviolet absorbers, specifically there may be mentioned: 2-(2'-hydroxy-5'-methacryloxyethylphenyl)-2H-benzotriazol (manufactured by OTSUKA Chemical Co., Ltd. product name: RUVA-93), 2-(2'-hydroxy-5'-methacryloxyethyl-3-tert-butylphenyl)-2H-benzotriazol, 2-(2'-hydroxy-5'-methacrylyloxypropyl-3-tert-butylphenyl)-5-chloro-2H-benzotriazol, 3-methacrylyl-2-hydroxypropyl-3-(3'-(2''-benzotriazolyl)-4-hydroxy-5-tert-butyl)phenyl propionate (Manufactured by Ciba-Geigy Japan Limited, product name: CGL-104).

As a triazine based ultraviolet absorber, specifically, TINUVIN 400 (product name, manufactured by Ciba-Geigy Japan Limited) etc. may be mentioned.

As light stabilizers, hindered amine based light stabilizers are preferable, among them a low basic stabilizer is more preferable, and especially stabilizers having a basic constant (pKb) of not less than 8 are preferable. Specifically, there may be mentioned: bis(2,2,6,6-tetra-methyl-4-piperidyl)succinate, bis(2,2,6,6-tetramethylpiperidyl)sebacate, bis(1,2,2,6,6-pentamethyl-4-piperidyl) 2-(3,5-di-tert-butyl-4-hydroxybenzyl)-2-butyl malonate, 1-(2-(3-(3,5-di-tert-butyl-4-hydroxy phenyl)propinyloxy)ethyl)-4-(3-(3,5-di-tert-butyl-4-hydroxyphenyl)propinyloxy)-2,2,6,6-tetramethylpiperidine, a mixture of bis(1,2,2,6,6-pentamethyl-4-piperidyl) sebacate and methyl-1,2,2,6,6-pentamethyl-4-piperidyl-sebacate (Manufactured by Ciba-Geigy Japan Limited, product name: TINUVIN 292), bis(1-octoxy-2,2,6,6-tetra-methyl-4-piperidyl)sebacate, TINUVIN 123 (product name, manufactured by Ciba-Geigy Japan Limited).

As radical polymerizable hindered amine based light stabilizers, specifically there may be mentioned: 1,2,2,6,6-pentamethyl-4-piperidyl methacrylate, 1,2,2,6,6-pentamethyl-4-piperidyl acrylate, 2,2,6,6-tetra-methyl-4-piperidyl methacrylate, 2,2,6,6-tetramethyl-4-piperidyl acrylate, 1,2,2,6,6-pentamethyl-4-imino piperidyl methacrylate, 2,2,6,6,- tetra-methyl-4-imino piperidyl methacrylate, 4-cyano-2,2,6,6-tetramethyl-4-piperidyl methacrylate, 4-cyano-1,2,2,6,6-pentamethyl-4-piperidyl methacrylate etc.

In the present invention, ultraviolet absorbers and/or light stabilizers may be used in methods of: introducing into the water-based dispersion (A) by making it exist at the time of emulsion polymerization for manufacturing of the water-based dispersion (A); introducing by mixing the ultraviolet absorber and/or light stabilizer with a coalescing agent(s), etc., and adding to the water-based dispersion (A); and introducing by mixing the ultraviolet absorber and/or light stabilizer with the coalescing agent(s), emulsifying by adding a surface active agent and water, and subsequently adding to the water-based dispersion (A). Using in combination of ultraviolet absorbers and light stabilizers will represent excellent durability based on synergistic effect.

In one preferable embodiment of the present invention, the ethylenic unsaturated monomer (E) consists of (E¹) and (E²) that are identical or different, the sulfosuccinic acid based surface active agent (C) and/or the surface active agent including alkylene oxide group (D) consist of surface active agents (C¹) and/or (D¹), (C²) and/or (D²) that are identical or different, and emulsion polymerization is performed in an order of a step (1) and a step (2). In step (1), emulsion polymerization of the ethylenic unsaturated monomer (E¹) is carried out in a water-based medium to obtain a step (1) emulsion, in the presence of the sulfosuccinic acid based surface active agent (C¹) and/or the surface active agent emulsifier including alkylene oxide group (D¹). In the step (2), by adding the ethylenic unsaturated monomer (E²), the sulfosuccinic acid based surface active agent (C²) and/or the surface active emulsifier including alkylene oxide group (D²) to the step (1) emulsion, if necessary, with a water-based medium, emulsion polymerization is performed, and silicone-modification is carried out using the hydrolyzable silane (F) to obtain a water-based dispersion (A). The obtained water-based dispersion (A), the colloidal inorganic particles and/or colloidal inorganic particles coated with organic polymer (B), if necessary, the sulfosuccinic acid based surface active agent (C) and the surface active agent including alkylene oxide group (D) are blended to obtain a water-based anti-fouling coating composition.

In an other preferably embodiment of the present invention, the ethylenic unsaturated monomer (E) consists of (E¹), (E²), and (E³) that are identical or different, the sulfosuccinic acid based surface active agent (C) and/or the surface active agent including alkylene oxide group (D) consist of surface active agents (C¹) and/or (D¹), (C²) and/or (D²), (C³) and/or (D³) that are identical or different, and emulsion polymerization is performed in an order of a step (1), a step (2), and a step (3). In the step (1), emulsion polymerization of the ethylenic unsaturated monomer (E¹) is carried out in a water-based medium, in the presence of the sulfosuccinic acid based surface active agent (C¹) and/or the surface active agent emulsifier (D¹) including alkylene oxide group, and silicone modification is carried out using the hydrolyzable silane (F) to obtain a step (1) emulsion. In the step (2), by adding the ethylenic unsaturated monomer (E²), the sulfosuccinic acid based surface active agent (C²) and/or the surface active agent emulsifier including alkylene oxide group (D²) to the step (1) emulsion, if necessary, with a water-based medium, emulsion polymerization is carried out to obtain a step (2) emulsion. In the step (3), by adding the ethylenic unsaturated monomer (E³), the sulfosuccinic acid based surface active agent (C³) and/or the surface active agent emulsifier including alkylene oxide group (D³) to the step (2) emulsion, if necessary, with a water-based medium, emulsion polymerization is performed and silicone modification is carried out using the hydrolyzable silane (F) to obtain a water-based dispersion (A). The obtained water-based dispersion (A), the colloidal inorganic particles and/or colloidal inorganic particles coated with organic polymer (B), and if necessary, the sulfosuccinic acid based surface active agent (C) and surface active agent including alkylene oxide group (D) are blended to provide a water-based anti-fouling coating composition.

A water-based coating composition of the present invention is useful as coatings, construction finishings, etc.

In coated articles coated using a coating including a water-based coating composition of the present invention, there may be mentioned: specifically, as article to be coated, concrete plates and pillars, cement mortar plates, slate plates, flexible boards, PC plates, ALC panels, calcium silicate boards, plaster boards, extrusion molded plates, inorganic base materials, such as concrete blocks, building materials using textile fabrics or nonwoven fabrics as base material, metal plates, metal components, wood, plastics articles, stones, and furthermore articles having old coating surface with already coated and subjected to long term deterioration may be mentioned. Substrate adjustment by primers, sealer coatings, cement fillers, or undercoat coatings is preferably performed to surfaces of these articles, and a water-based coating composition of the present invention is used as a coating to articles having these substrate adjustments performed; and thereby coating articles excellent in fouling-resistance may be obtained. Buildings, cars, ships, bridges, etc. may be mentioned as complex of these coating articles.

As exterior wall materials coated using coatings including a water-based coating composition of the present invention, ceramics sidings, extrusion cement board exterior wall materials, ALC exterior wall materials, exterior tiles, metal sidings, etc. may be mentioned.

As buildings coated using coatings including a water-based coating composition of the present invention, public facilities, such as personal residences, apartment houses, skyscrapers, bridges, gymnasiums, and ball game grounds may be mentioned.

As coating methods in case of using coatings including a water-based coating composition of the present invention, a brush coating, a roller coating, a spray painting, a curtain flow coater coating, a roll coating, etc. may be mentioned.

Hereinafter, with reference to Examples and Comparative Examples, the present invention will be described in detail. In addition, part and percents in Examples and Comparative Examples represent mass part and mass percents, respectively. In physical properties examination of obtained water-based coating compositions, coatings were prepared by blending compositions represented below using the water-based coating composition, and examination was carried out according to test methods represented hereinafter.

### <Coating formulation composition>

### • Production of clear coating (except for Comparative Examples 1 and 2)

| | |
|---|---|
| Each water-based anti-fouling coating composition (expressed in terms of solids content) | 500.00 parts |
| Mixture of 50 parts of ethylene glycol monobutyl ether, and 50 parts of water | 100.00 parts |
| CS-12 (product name, manufactured by Chisso Corp.) | 100.00 parts |
| (ethylene glycol monobutyl ether and CS-12 were not blend in Comparative Examples 1 and 2.) | |

### • Production of pigment dispersion

| | |
|---|---|
| Dispersing agent: Pig. Disperser MD20 (product name, manufactured by BASF Japan) | 5.35 parts |
| Aqueous ammonia | 0.50 parts |
| Propylene glycol | 23.50 parts |
| Water | 147.50 parts |
| TIPAQUE CR-97 (trade name, manufactured by Ishihara Sangyo Kaisha, Ltd.) | 333.50 parts |
| Defoaming agent: BYK-028 (trade name, manufactured by Bic Chemie Japan) | 2.85 parts |

The above compound was disperses in a desk sand mill for 20 minutes to obtain a pigment dispersion.

### • Production of enamel coating (except for Comparative Examples 1 and 2)

| | |
|---|---|
| Each water-based anti-fouling coating composition (expressed in terms of solids content) | 500.00 parts |
| Mixture of 50 parts of ethylene glycol monobutyl ether, and 50 parts of water | 100.00 parts |
| CS-12 (product name, manufactured by Chisso Corp.) | 100.00 parts |
| The above-mentioned pigment dispersion | 513.20 parts |
| Thickener: 10% aqueous solution of ADEKANOL UH-438 (manufactured by Asahi Denka Kogyo K.K.) | proper quantity |
| (Ethylene glycol monobutyl ether and CS-12 were not blended in Comparative Examples 1 and 2.) | |

### <Test method>

### • Solids content of water-based dispersion

Dry mass after dried at 105°C for 3 hours of a solids content for measuring, such as water-based dispersion

### • Resin solids content of water-based dispersion

Mass obtained by subtraction of a dry weight, such as surface active agent and polymerization initiator from a dry weight after 3-hour dried at 105°C of water-based dispersion

### • Measuring of percentage of solids content, such as water-based dispersion

About 1 g of water-based dispersion was correctly weighed into an aluminum pan with a weight given beforehand, then was dried at 105°C with constant temperature dryer for 3 hours, cooled in a desiccator with silica gel in 30-minute and then weighed accurately. An after-dried mass of the substance concerned was divided with a mass before dried to obtain a percentage of solids content.

### • Storage stability of a paint for coating.

The enamel coating composition in a well-closed container was kept for four weeks in 50°C thermostat, and judged. Acceptance criterion as follows:
⊚: no viscosity increased and a fluidity maintained
Δ: viscosity increased but a fluidity maintained
× : gelled

### • Water contact angle of clear film

The clear coating composition was applied by a wire coater on a glass plate so that a dried film thickness of 100 g/m² were obtained, and was dried for four weeks at a room temperature, and a test sample was obtained. A water contact angle of the test sample was measured for with CA-X150 type contact angle measuring instrument manufactured by Kyowa Interface Science Co., LTD.

### • Water resistance

Using a wire coater No. 50, the enamel coating composition was applied to a sulfuric-acid-anodized aluminum plate, and was dried for two days at room temperature. It was immersed in 20°C water for 30 days after further dried for two days at 50°C, and a state was judged by visual inspection. Acceptance criterion is as follows:
⊚: no blister nor glossy sink mark observed
○: some blister observed, but no glossy sink mark observed
Δ: blister and glossy sink mark observed
×: blister whole surface and much glossy sink mark observed

### • Rain streaks-like fouling resistance

On an sulfuric-acid-anodized aluminum plate shown in FIG. 1, compounds of each Example and Comparative Example was applied, as a coating, by a wire coater so that a dried film thickness 100 g/m² might be obtained, and was dried for four weeks at room temperature, and a test sample was obtained. The test sample was fixed in the open air with its coating portion vertical to the ground and facing toward the north, and rain steaks-like fouling was visually examined after three months exposure. Acceptance criterion is as follows.
⊚: no rain streaks-like fouling
○: whole surface fouling, but no rain streaks-like fouling
Δ: whole surface fouling and rain streaks-like fouling a little
×: rain streaks-like fouling remarkably.

### • Weather resistance

Using a wire coater No. 50, the enamel coating compound was applied to a sulfuric-acid-anodized aluminum plate, and was dried for 30 days at room temperature. Then, weathering test (rainfall cycle; 18 minute/2 hours, black panel temperature of 60 to 66°C) was performed using Sun Shine type weatherometer (made by Suga Test Instruments Co., Ltd., WEL-SUN-DC). Change of appearance after exposure of 2000-hour was observed. Acceptance criterion is as follows.
ⓞ: no change observed
○: glossy sink mark observed
Δ: partial glossy sink mark and crack observed
×: glossy sink mark and crack on whole surface observed (Manufacturing of water-based dispersion 1)

Into a reaction vessel with an agitator, a reflux condenser, a dropping tub, and a thermometer, water 296 parts, and a sulfosuccinic acid based reactive surface active agents (product name: LATEMUL S-180A (active ingredient : approximately 50%), manufactured by Kao Corp.): 4 parts were introduced. The temperature in the reaction vessel was raised to 80°C. Then, 5 minutes after adding 10 parts of 2% aqueous solution of ammonium persulfate, an emulsified mixture was introduced over 40 minutes from the dropping tub, which consisted of methyl methacrylate: 25 parts, cyclohexyl methacrylate: 50 parts, n-butyl acrylate: 15 parts, methacrylic acid: 10 parts, LATEMUL S-180A: 2 parts, 25% aqueous solution of an anion type reactive surface active agent including alkylene oxide group (product name: Aquaron KH-10, manufactured by Dai-Ichi Kogyo Seiyaku Co., Ltd.): 4 parts, 20% aqueous solution of a nonionic surface active agent including alkylene oxide group (product name: EMULGEN 120, manufactured by Kao Corp.): 5 parts, 2% of aqueous solution of ammonium persulfate: 15 parts, and water: 51 parts. Temperature of the reaction vessel was kept at 80°C during introduction. After introduction was completed, the temperature of reaction vessel was set at 80°C, and was maintained for 30 minutes.

Then, an emulsified mixture was introduced over 160 minutes, which consisted of methyl methacrylate: 109 parts, cyclohexyl methacrylate: 160 parts, n-butyl acrylate: 123 parts, methacrylic acid: 8 parts, LATEMUL S-180A: 8 parts, 25% aqueous solution of Aquaron KH-10: 16 parts, 20% aqueous solution of EMULGEN 120: 20 parts, 2% aqueous solution of ammonium persulfate: 60 parts, and water: 204 parts. Temperature of the reaction vessel was kept at 80°C during introduction. After introduction was completed, the temperature of reaction vessel was set at 80°C, and was maintained for 120 minutes.

It gave pH 2.0 when hydrogen ion concentration was measured after cooling to a room temperature. After adding 25% aqueous ammonia solution and adjusting pH to 8, the emulsion was filtered with a wire net of 100 meshes. Dry mass of filtered aggregate gave 0.06% to all monomers, and small quantity. Obtained acrylic emulsion gave 44.7% of solids content, and gave single distribution having a particle diameter of 98 nm.

### (Manufacturing of water-based dispersion 2)

A reaction vessel with an agitator, a reflux condenser, 2-necked dropping tubs, and a thermometer was prepared, the 2-necked dropping tubs were assembled so that it could introduce liquids into the reaction system via a Y character pipe (a wire net of 100 meshes was filled with at an exit of the Y character pipe, was filled with molecular sieves 3A (product name: manufactured by Wako Pure Chemical Industries, Ltd.) up to a place where liquids from the 2-necked dropping tubs were mixed, and the system was adjusted so that gentle mixing with a pre-emulsified liquid and a hydrolyzable silane including radical polymerizable monomer might be enabled.) Into the reaction vessel, water 296 parts, and sulfosuccinic acid based reactive surface active agent (product name: LATEMUL S-180A (active ingredient : approximately 50%), manufactured by Kao Corp.): 4 parts were introduced. The temperature in the reaction vessel was raised to 80°C. Then, 5 minutes after adding 10 parts of 2% aqueous solutions of ammonium persulfate, an emulsified mixture was introduced over 40 minutes from the dropping tub, which consisted of methyl methacrylate: 25 parts, cyclohexyl methacrylate: 50 parts, n-butyl acrylate: 15 parts, methacrylic acid: 10 parts, LATEMUL S-180A: 4 parts, 25% aqueous solution of anion type reactive surface active agent including alkylene oxide group (product name: Aquaron KH-10, manufactured by Dai-Ichi Kogyo Seiyaku Co., Ltd.): 4 parts, 20% aqueous solution of nonionic surface active agent (product name: EMULGEN 120, Kao Corp. make) including alkylene oxide group: 5 parts, 2% aqueous solution of ammonium persulfate: 15 parts, and water: 54 parts. Temperature of the reaction vessel was kept at 80°C during introduction. After introduction was completed, the temperature of reaction vessel was set at 80°C, and was maintained for 30 minutes.

Then, an emulsified mixture was introduced over 160 minutes via the Y character pipe from separate dropping tubs, which consisted of methyl methacrylate: 109 parts, cyclohexyl methacrylate: 160 parts, n-butyl acrylate: 123 parts, methacrylic acid: 8 parts, LATEMUL S-180A: 16 parts, 25% aqueous solution of Aquaron KH-10: 16 parts, 20% aqueous solution of EMULGEN 120: 20 parts, 2% aqueous solution of ammonium persulfate: 60 parts, and water: 216 parts, and a mixture consisting of γ-methacryloxy propyl trimethoxy silane: 1 part, dimethyl dimethoxy silane: 5 parts, and methyl trimethoxy silane: 35 parts. A pH value during reaction of silicone modification was maintained not more than 4. A temperature of the reaction vessel was kept at 80°C during introduction. After introduction was completed, the temperature of reaction vessel was set at 80°C, and was maintained for 120 minutes.

It gave pH 2.0 when hydrogen ion concentration was measured after cooling to a room temperature. After adding 25% aqueous ammonia solution and adjusting pH to 8, the emulsion was filtered with a wire net of 100 mesh. Dry mass of filtered aggregate gave 0.12% to all monomers, and small quantity. Obtained acrylic emulsion gave 44.9% of solids content, and gave single distribution having a particle diameter of 100 nm.

### (Manufacturing of water-based dispersion 3)

Into a reaction vessel with an agitator, a reflux condenser, a dropping tub, and a thermometer, water: 296 parts, and a sulfosuccinic acid based reactive surface active agent (product name: LATEMUL S-180A (active ingredient: approximately 50%), manufactured by Kao Corp.): 4 parts, were introduced. The temperature in the reaction vessel was raised to 80°C. Then, 5 minutes after adding 10 parts of 2% aqueous solutions of ammonium persulfate, an emulsified mixture was introduced over 40 minutes from the dropping tub, which consisted of methyl methacrylate: 25 parts, cyclohexyl methacrylate: 50 parts, n-butyl acrylate: 15 parts, methacrylic acid: 10 parts, γ-methacryloxy propyl trimethoxy silane: 0.5 parts, LATEMUL S-180A: 2 parts, anion type reactive surface active agent including alkylene oxide group (product name: ADEKA rear soap SR-1025, Asahi Denka Kogyo K.K. make): 4 parts, 20% aqueous solution of Nonion type property surface active agent (product name: ADEKA rear soap NE-20, Asahi Denka Kogyo K.K. make) including alkylene oxide group: 5 parts, 2% aqueous solution of ammonium persulfate: 15 parts, and water: 51 parts. Temperature of the reaction vessel was kept at 80°C during introduction. After introduction was completed, the temperature of reaction vessel was set at 80°C, and was maintained for 30 minutes.

Then, an emulsified mixture was introduced over 160 minutes, which consisted of methyl methacrylate: 109 parts, cyclohexyl methacrylate: 160 parts, n-butyl acrylate: 123 parts, methacrylic acid: 8 parts, γ-methacryloxy propyl trimethoxy silane: 2 parts, LATEMUL S-180A: 8 parts, ADEKA Rear soap SR-1025: 16 parts, 20% aqueous solution of ADEKA rear soap NE-20: 20 parts, 2% aqueous solution of ammonium persulfate: 60 parts, and water: 204 parts. Temperature of the reaction vessel was kept at 80°C during introduction. After introduction was completed, the temperature of reaction vessel was set at 80°C, and was maintained for 120 minutes.

It gave pH 2.0 when hydrogen ion concentration was measured after cooling to a room temperature. After adding 25% aqueous ammonia solution and adjusting pH to 8, the emulsion was filtered with a wire net of 100 meshes. Dry mass of filtered aggregate gave 0.08 percents to all monomers, and small quantity. Obtained acrylic emulsion gave 44.8% of solids content, and gave single distribution having a particle diameter of 97 nm.

### (Manufacturing of water-based dispersion 4)

A reaction vessel with an agitator, a reflux condenser, 2-necked dropping tubs, and thermometer is prepared, the 2-necked dropping tubs were assembled so that it could introduce liquids into the reaction system via a Y character pipe (a wire net of 100 meshes was filled with at an exit of the Y character pipe, was filled with molecular sieves 3A (product name: manufactured by Wako Pure Chemical Industries, Ltd.) up to a place where liquids from the 2-necked dropping tubs were mixed, and the system was adjusted so that gentle mixing with a pre-emulsified liquid and a hydrolyzable silane including radical polymerizable monomer might be enabled.) Into the reaction vessel, water: 296 parts, and sulfosuccinic acid based reactive surface active agent (product name: LATEMUL S-180A (active ingredient : approximately 50%), manufactured by Kao Corp.): 4 parts were introduced. The temperature in the reaction vessel was raised to 80°C. Then, 5 minutes after adding 10 parts of 2% aqueous solution of ammonium persulfate, an emulsified mixture was introduced over 40 minutes from the dropping tub, which consisted of methyl methacrylate: 25 parts, cyclohexyl methacrylate: 50 parts, n-butyl acrylate: 15 parts, methacrylic acid: 10 parts, anionic reactive surface active agent including alkylene oxide group (product name: LATEMUL PD-104, manufactured by Kao Corp.): 5 parts, 20% aqueous solution of nonionic surface active agent including alkylene oxide group (product name: EMULGEN 920, manufactured by Kao Corp.): 5 parts, 2% aqueous solution of ammonium persulfate: 15 parts, and water: 47 parts. Temperature of the reaction vessel was kept at 80°C during introduction. After introduction was completed, the temperature of reaction vessel was set at 80°C, and was maintained for 30 minutes.

Then an emulsified mixture consisting of methyl methacrylate: 109 parts, cyclohexyl methacrylate: 160 parts, n-butyl acrylate: 123 parts, methacrylic acid: 8 parts, LATEMUL PD-104: 20 parts, 20% aqueous solution of EMULGEN 920: 20 parts, 2% aqueous solution of ammonium persulfate: 60 parts, and water: 188 parts, and a mixture consisting of γ-methacryloxy propyl trimethoxy silane: 1 part, dimethyl dimethoxy silane: 5 parts, and methyl trimethoxy silane 35 parts were introduced over 160 minutes via the Y character pipe from separate dropping tubs. A pH value during reaction of silicone modification was maintained not more than 4. A temperature of the reaction vessel was kept at 80°C during introduction. After introduction was completed, the temperature of reaction vessel was set at 80°C, and was maintained for 120 minutes.

It gave pH 2.0 when hydrogen ion concentration was measured after cooling to a room temperature. After adding 25% aqueous ammonia solution and adjusting pH to 8, the emulsion was filtered with a wire net of 100 meshes. Dry mass of filtered aggregate gave 0.10% based on all monomers, and small quantity. Obtained acrylic emulsion gave 44.7% of solids content, and gave single distribution having a particle diameter of 98 nm.

### (Manufacturing of water-based dispersion 5)

A reaction vessel with an agitator, a reflux condenser, 2-necked dropping tubs, and a thermometer was prepared, the 2-necked dropping tubs were assembled so that it could introduce liquids into the reaction system via a Y character pipe (a wire net of 100 meshes was disposed at an exit of the Y character pipe, was filled with molecular sieves 3A (product name: manufactured by Wako Pure Chemical Industries, Ltd.) up to a place where liquids from the 2-necked dropping tubs were mixed, and the system was adjusted so that gentle mixing with a pre-emulsified liquid and a hydrolyzable silane including radical polymerizable monomer might be enabled.) Into the reaction vessel, water: 296 parts, and sulfosuccinic acid based reactive surface active agent (product name: LATEMUL S-180A (active ingredient: approximately 50%), manufactured by Kao Corp.): 4 parts were introduced. The temperature in the reaction vessel was raised to 80°C. Then, 5 minutes after adding 10 parts of 2% aqueous solutions of ammonium persulfate, an emulsified mixture consisting of a mixture of methyl methacrylate: 32 parts, cyclohexyl methacrylate: 60 parts, n-butyl methacrylate: 30 parts, n-butyl acrylate: 74 parts, methacrylic acid: 4 parts, benzotriazol based ultraviolet absorber (product name: TINUVIN 384, manufactured by Ciba Specialty Chemicals): 1 part, and hindered amine based light stabilizer (product name: TINUVIN 123, manufactured by Ciba Specialty Chemicals): 1 part; LATEMUL S-180A: 8 parts; 25% aqueous solution of anionic reactive surface active agent including alkylene oxide group (product name: Aquaron KH-10, manufactured by Dai-Ichi Kogyo Seiyaku Co., Ltd.): 8 parts; 20% aqueous solution of nonionic surface active agent including alkylene oxide group (product name: EMULGEN 120, manufactured by Kao Corp.): 10 parts; 2% aqueous solution of ammonium persulfate: 30 parts; and water: 86 parts; and a mixture consisting of γ-methacryloxy propyl trimethoxy silane: 0.5 parts and methyl trimethoxy silane: 20 parts were introduced over 80 minutes via the Y character pipe from separate dropping tubs. A pH value during reaction of silicone modification was maintained not more than 4. Temperature of the reaction vessel was kept at 80°C during introduction. After introduction was completed, the temperature of reaction vessel was set at 80°C, and was maintained for 30 minutes.

Then an emulsified mixture consisting of a mixture of methyl methacrylate: 16 parts, cyclohexyl methacrylate: 50 parts, n-butyl methacrylate: 15 parts, n-butyl acrylate: 9 parts, methacrylic acid: 10 parts, TINUVIN 384: 0.5 parts, TINUVIN 123: 0.5 parts; LATEMUL S-180A: 4 parts; 25% aqueous solution of Aquaron KH-10: 4 parts; 20% aqueous solution of EMULGEN 120: 5 parts; 2% aqueous solution of ammonium persulfate: 15 parts; and water: 42 parts were introduced over 40 minutes from the dropping tub. Temperature of the reaction vessel was kept at 80°C during introduction. After introduction was completed, the temperature of reaction vessel was set at 80°C, and was maintained for 30 minutes.

Then an emulsified mixture consisting of a mixture of methyl methacrylate: 42 parts, cyclohexyl methacrylate: 100 parts, n-butyl methacrylate: 30 parts, n-butyl acrylate: 24 parts, methacrylic acid: 4 parts, TINUVIN 384: 1 part and TINUVIN 123: 1 part; LATEMUL S-180A: 8 parts; 25% aqueous solution of Aquaron KH-10: 8 parts; 20% aqueous solution of EMULGEN 120: 10 parts; 2% aqueous solution of ammonium persulfate: 30 parts; and water: 86 parts; and a mixture consisting of γ-methacryloxy propyl trimethoxy silane: 0.5 parts and methyl trimethoxy silane: 20 parts, were introduced over 80 minutes via the Y character pipe from separate dropping tubs. A pH value during reaction of silicone modification was maintained not more than 4. Temperature of the reaction vessel was kept at 80°C during introduction. After introduction was completed, the temperature of reaction vessel was set at 80°C, and was maintained for 120 minutes.

It gave pH 2.0 when hydrogen ion concentration was measured after cooling to a room temperature. After adding 25% aqueous ammonia solution and adjusting pH to 8, the emulsion was filtered with a wire net of 100 meshes. Dry mass of filtered aggregate gave 0.05% to all monomers, and small quantity. Obtained acrylic emulsion gave 45.5% of solids content, and gave single distribution having a particle diameter of 98 nm.

### (Manufacturing of water-based dispersion 6)

A reaction vessel with an agitator, a reflux condenser, 2-necked dropping tubs, and a thermometer was prepared, the 2-necked dropping tubs were assembled so that it could introduce liquids into the reaction system via a Y character pipe (a wire net of 100 meshes was disposed at an exit of the Y character pipe, was filled with molecular sieves 3A (product name: manufactured by Wako Pure Chemical Industries, Ltd.) up to a place where liquids from the 2-necked dropping tubs were mixed, and the system was adjusted so that gentle mixing with a pre-emulsified liquid and a hydrolyzable silane including radical polymerizable monomer might be enabled.) Into the reaction vessel, water: 296 parts, and sulfosuccinic acid based reactive surface active agent (product name: LATEMUL S-180A (active ingredient: approximately 50%), manufactured by Kao Corp.): 4 parts were introduced. The temperature in the reaction vessel was raised to 80°C. Then, 5 minutes after adding 10 parts of 2% aqueous solutions of ammonium persulfate, an emulsified mixture consisting of methyl methacrylate: 35 parts, cyclohexyl methacrylate: 60 parts, n-butyl acrylate: 101 parts, methacrylic acid: 4 parts, LATEMUL S-180A: 8 parts, 25% aqueous solution of anion type reactive surface active agent including alkylene oxide group (product name: Aquaron KH-10, manufactured by Dai-Ichi Kogyo Seiyaku Co., Ltd.): 16 parts, 20% aqueous solution of nonionic surface active agent including alkylene oxide group (product name: EMULGEN 120, manufactured by Kao Corp.): 10 parts, 2% aqueous solution of ammonium persulfate: 30 parts, and water: 80 parts, and a mixture consisting of γ-methacryloxy propyl trimethoxy silane: 0.5 parts and methyl trimethoxy silane: 60 parts were introduced over 80 minutes via the Y character pipe from separate dropping tubs. A pH value during reaction of silicone modification was maintained not more than 4. Temperature of the reaction vessel was kept at 80°C during introduction. After introduction was completed, the temperature of reaction vessel was set at 80°C, and was maintained for 30 minutes.

Then an emulsified mixture consisting of methyl methacrylate: 25 parts, cyclohexyl methacrylate: 50 parts, n-butyl acrylate: 15 parts, methacrylic acid: 10 parts, LATEMUL S-180A: 4 parts, 25% aqueous solution of Aquaron KH-10: 8 parts, 20% aqueous solution of EMULGEN 120: 5 parts, 2% aqueous solution of ammonium persulfate: 15 parts, and water: 40 parts was introduced over 40 minutes from the dropping tub. Temperature of the reaction vessel was kept at 80°C during introduction. After introduction was completed, the temperature of reaction vessel was set at 80°C, and was maintained for 30 minutes.

Then an emulsified mixture consisting of methyl methacrylate: 49 parts, cyclohexyl methacrylate: 100 parts, n-butyl acrylate: 47 parts, methacrylic acid: 4 parts, LATEMUL S-180A: 8 parts, 25% aqueous solution of Aquaron KH-10: 16 parts, 20% aqueous solution of EMULGEN 120: 10 parts, 2% aqueous solution of ammonium persulfate: 30 parts, and water: 80 parts, and a mixture consisting of γ-methacryloxy propyl trimethoxy silane: 0.5 parts, methyl trimethoxy silane: 60 parts was introduced over 80 minutes via the Y character pipe from separate dropping tubs. A pH value during reaction of silicone modification was maintained not more than 4. Temperature of the reaction vessel was kept at 80°C during introduction. After introduction was completed, the temperature of reaction vessel was set at 80°C, and was maintained for 120 minutes.

It gave pH 2.0 when hydrogen ion concentration was measured after cooling to a room temperature. After adding 25% aqueous ammonia solution and adjusting pH to 8, the emulsion was filtered with a wire net of 100 meshes. Dry mass of filtered aggregate gave 0.12% to all monomers, and small quantity. Obtained acrylic emulsion gave 45.5% of solids content, and gave single distribution having a particle diameter of 102 nm.

### (Manufacturing of water-based dispersion 7)

A reaction vessel with an agitator, a reflux condenser, 2-necked dropping tubs, and a thermometer was prepared, the 2-necked dropping tubs were assembled so that it could introduce liquids into the reaction system via a Y character pipe (a wire net of 100 meshes was disposed at an exit of the Y character pipe, was filled with molecular sieves 3A (product name: manufactured by Wako Pure Chemical Industries, Ltd.) up to a place where liquids from the 2-necked dropping tubs were mixed, and the system was adjusted so that gentle mixing with a pre-emulsified liquid and a hydrolyzable silane including radical polymerizable monomer might be enabled.) Into the reaction vessel, water: 292 parts, and 25% aqueous solution of anion type reactive surface active agent including alkylene oxide group (product name: Aquaron KH-10, manufactured by Dai-Ichi Kogyo Seiyaku Co., Ltd.): 8 parts were introduced. The temperature in the reaction vessel was raised to 80°C. Then, 5 minutes after adding 10 parts of 2% aqueous solutions of ammonium persulfate, an emulsified mixture consisting of a mixture of methyl methacrylate: 18 parts, cyclohexyl methacrylate: 100 parts, n-butyl acrylate: 78 parts, methacrylic acid: 4 parts, benzotriazol based ultraviolet absorber (product name: TINUVIN 384, made in Ciba Specialty Chemicals): 1 part and hindered amine based light stabilizer (product name: TINUVIN 123, manufactured by Ciba Specialty Chemicals): 1 part; sulfosuccinic acid based un-reacting type surface active agent (product name: aerosol OT-75 (active ingredient: approximately 75%), manufactured by Mitsui Cytec Inc.): 5.3 parts; 25% aqueous solution of anion type reactive surface active agent including alkylene oxide group (product name: Aquaron KH-10, manufactured by Dai-Ichi Kogyo Seiyaku Co., Ltd.): 16 parts; 2% aqueous solution of ammonium persulfate: 30 parts; and water: 90.7 parts, and a mixture consisting of γ-methacryloxy propyl trimethoxy silane: 0.5 parts, methyl trimethoxy silane: 25 parts and dimethyl dimethoxy silane: 1.5 parts, were introduced over 80 minutes via the Y character pipe from separate dropping tubs. A pH value during reaction of silicone modification was maintained not more than 4. Temperature of the reaction vessel was kept at 80°C during introduction. After introduction was completed, the temperature of reaction vessel was set at 80°C, and was maintained for 30 minutes.

Then, an emulsified mixture consisting of a mixture of methyl methacrylate: 27 parts, cyclohexyl methacrylate: 50 parts, n-butyl acrylate: 13 parts, methacrylic acid: 10 parts, TINUVIN 384: 0.5 parts, and TINUVIN 123: 0.5 parts; Aerosol OT-75: 2.7 parts; 25% aqueous solution of Aquaron KH-10: 8 parts; 2% aqueous solution of ammonium persulfate: 15 parts; and water: 45.3 parts was introduced over 40 minutes from the dropping tub. Temperature of the reaction vessel was kept at 80°C during introduction. After introduction was completed, the temperature of reaction vessel was set at 80°C, and was maintained for 30 minutes.

Then, an emulsified mixture consisting of a mixture of methyl methacrylate: 18 parts, cyclohexyl methacrylate: 100 parts, n-butyl acrylate: 78 parts, methacrylic acid: 4 parts, TINUVIN 384: 1 part, and TINUVIN 123: 1 part; Aerosol OT-75: 5.3 parts; 25% aqueous solution of Aquaron KH-10: 16 parts; 2% aqueous solution of ammonium persulfate: 30 parts; and water: 90.7 parts, and a mixture consisting of γ-methacryloxy propyl trimethoxy silane: 0.5 parts, methyl trimethoxy silane: 25 parts and dimethyl dimethoxy silane: 1.5 parts, were introduced over 80 minutes via the Y character pipe from separate dropping tubs. A pH value during reaction of silicone modification was maintained not more than 4. Temperature of the reaction vessel was kept at 80°C during introduction. After introduction was completed, the temperature of reaction vessel was set at 80°C, and was maintained for 120 minutes.

It gave pH 2.2 when hydrogen ion concentration was measured after cooling to a room temperature. After adding 25% aqueous ammonia solution and adjusting pH to 8, the emulsion was filtered with a wire net of 100 meshes. Dry mass of filtered aggregate gave 0.13% to all monomers, and small quantity. Obtained acrylic emulsion gave 45.2% of solids content, and gave single distribution having a particle diameter of 108 nm.

### (Manufacturing of water-based dispersion 8)

A reaction vessel with an agitator, a reflux condenser, 2-necked dropping tubs, and a thermometer was prepared, the 2-necked dropping tubs were assembled so that it could introduce liquids into the reaction system via a Y character pipe (a wire net of 100 meshes was disposed at an exit of the Y character pipe, was filled with molecular sieves 3A (product name: manufactured by Wako Pure Chemical Industries, Ltd.) up to a place where liquids from the 2-necked dropping tubs were mixed, and the system was adjusted so that gentle mixing with a pre-emulsified liquid and a hydrolyzable silane including radical polymerizable monomer might be enabled.) Into the reaction vessel, water: 292 parts, and 25% aqueous solution of anion type reactive surface active agent including alkylene oxide group (product name: Aquaron KH-10, manufactured by Dai-Ichi Kogyo Seiyaku Co., Ltd.): 8 parts were introduced. The temperature in the reaction vessel was raised to 80°C. Then, 5 minutes after adding 10 parts of 2% aqueous solutions of ammonium persulfate, an emulsified mixture consisting of a mixture of methyl methacrylate: 18 parts, cyclohexyl methacrylate: 100 parts, n-butyl acrylate: 78 parts, methacrylic acid: 4 parts, benzotriazol based ultraviolet absorber (product name: TINUVIN 384, manufactured by Ciba Specialty Chemicals): 1 part, and hindered amine based light stabilizer (product name: TINUVIN 123, manufactured by Ciba Specialty Chemicals): 1 part; 25% aqueous solution of anion type reactive surface active agent including alkylene oxide group (product name: Aquaron KH-10, manufactured by Dai-Ichi Kogyo Seiyaku Co., Ltd.): 16 parts; 2% aqueous solution of ammonium persulfate: 30 parts; and water: 119 parts, and a mixture consisting of γ-methacryloxy propyl trimethoxy silane: 0.5 parts, methyl trimethoxy silane: 25 parts and dimethyl dimethoxy silane: 1.5 parts, were introduced over 80 minutes via the Y character pipe from separate dropping tubs. A pH value during reaction of silicone modification was maintained not more than 4. Temperature of the reaction vessel was kept at 80°C during introduction. After introduction was completed, the temperature of reaction vessel was set at 80°C, and was maintained for 30 minutes.

Then, an emulsified mixture consisting of a mixture of methyl methacrylate: 27 parts, cyclohexyl methacrylate: 50 parts, n-butyl acrylate: 13 parts, methacrylic acid: 10 parts, TINUVIN 384: 0.5 parts and TINUVIN 123: 0.5 parts; 25% aqueous solution of Aquaron KH-10: 8 parts; 2% aqueous solution of ammonium persulfate: 15 parts; and water: 46 parts was introduced over 40 minutes from the dropping tub. Temperature of the reaction vessel was kept at 80°C during introduction. After introduction was completed, the temperature of reaction vessel was set at 80°C, and was maintained for 30 minutes.

Then, an emulsified mixture consisting of a mixture of methyl methacrylate: 18 parts, cyclohexyl methacrylate: 100 parts, n-butyl acrylate: 78 parts, methacrylic acid: 4 parts, TINUVIN 384: 1 part, and TINUVIN 123: 1 part; 25% aqueous solution of Aquaron KH-10: 16 parts; 2% aqueous solution of ammonium persulfate: 30 parts; and water: 119 parts, and a mixture consisting of γ-methacryloxy propyl trimethoxy silane: 0.5 parts, methyl trimethoxy silane: 25 parts and dimethyl dimethoxy silane: 1.5 parts were introduced over 80 minutes via the Y character pipe from separate dropping tubs. pH value during reaction of silicone modification was maintained not more than 4. Temperature of the reaction vessel was kept at 80°C during introduction. After introduction was completed, the temperature of reaction vessel was set at 80°C, and was maintained for 120 minutes.

It gave pH 2.1 when hydrogen ion concentration was measured after cooling to a room temperature. After adding 25% aqueous ammonia solution and adjusting pH to 8, the emulsion was filtered with a wire net of 100 meshes. Dry mass of filtered aggregate gave 0.11% to all monomers, and small quantity. Obtained acrylic emulsion gave 44.7% of solids content, and gave single distribution having a particle diameter of 107 nm.

### (Manufacturing of water-based dispersion 9)

Into a reaction vessel with an agitator, a reflux condenser, a dropping tub, and a thermometer water: 290 parts, and 25% aqueous solution of anionic surface active agent including alkylene oxide group (product name: Aquaron KH-10, manufactured by Dai-Ichi Kogyo Seiyaku Co., Ltd.): 10 parts were introduced, after raising a temperature in the reaction vessel to 80°C, 5 minutes after adding 10 parts of 2% aqueous solutions of ammonium persulfate, an emulsified mixture consisting of methyl methacrylate: 25 parts, cyclohexyl methacrylate: 50 parts, butyl acrylate: 15 parts, methacrylic acid: 10 parts, 25% aqueous solution of Aquaron KH-10: 4 parts, 20% aqueous solution of nonionic surface active agent (product name: EMULGEN 120, Kao Corp. make) including alkylene oxide group: 5 parts, 2% aqueous solution of ammonium persulfate: 15 parts, and water: 48 parts was introduced over 40 minutes from the dropping tub. Temperature of the reaction vessel was kept at 80°C during introduction. After introduction was completed, the temperature of reaction vessel was set at 80°C, and was maintained for 30 minutes.

Then an emulsified mixture consisting of methyl methacrylate: 109 parts, cyclohexyl methacrylate: 160 parts, butyl acrylate: 123 parts, methacrylic acid: 8 parts, 25% aqueous solution of Aquaron KH-10: 16 parts, 20% aqueous solution of EMULGEN 120: 20 parts, 2% of aqueous solution of ammonium persulfate: 60 parts, and water: 192 parts was introduced over 160 minutes from the dropping tub. Temperature of the reaction vessel was kept at 80°C during introduction. After introduction was completed, the temperature of reaction vessel was set at 80°C, and was maintained for 120 minutes.

It gave pH 2.0 when hydrogen ion concentration was measured after cooling to a room temperature. After adding 25% aqueous ammonia solution and adjusting pH to 8, the emulsion was filtered with a wire net of 100 meshes. Dry mass of filtered aggregate gave 0.07% to all monomers, and small quantity. Obtained acrylic emulsion gave 44.5% of solids content, and gave single distribution having a particle diameter of 98 nm.

### (Reference Example 1)

Into 223.7 parts of water-based dispersion obtained by Manufacturing of water-based dispersion 1, sulfosuccinic acid based surface active agent (product name: LATEMUL S-180A (active ingredient: approximately 50%), manufactured by Kao Corp.): 4 parts, anionic surface active agent including alkylene oxide group (product name: LEVENOL WZ (active ingredient: approximately 26%), manufactured by Kao Corp.): 2 parts, 20% aqueous solution of nonionic surface active agent including alkylene oxide group (product name: EMULGEN 920, manufactured by Kao Corp.): 2.5 parts, and colloidal silica (product name: Snowtex-30, manufactured by Nissan Chemical Industries, Ltd.): 33.3 parts were mixed uniform in this order, to obtain a water-based anti-fouling coating composition having 42.6 percents of solids content. The above-mentioned coating formulation was given to this water-based anti-fouling coating composition, and each examination was performed. Table 1 shows results.

### (Reference Example 2)

Into 222.7 parts of water-based dispersions obtained by "Manufacturing of water-based dispersion 2", sulfosuccinic acid based surface active agent (product name: LATEMUL S-180A (active ingredient : approximately 50%), manufactured by Kao Corp.): 2 parts, anionic surface active agent including alkylene oxide group (product name: EMAL 20C (active ingredient: approximately 25%), manufactured by Kao Corp.): 2 parts, 20% aqueous solution of nonionic surface active agent including alkylene oxide group (product name: EMULGEN 130K, manufactured by Kao Corp.): 2.5 parts, and colloidal silica (product name: ADELITE AT-30, manufactured by Asahi Denka Kogyo K.K.): 33.3 parts were mixed uniform in this order to obtain a water-based anti-fouling coating composition of 42.7% of solids content. The above-mentioned coating formulation was given to this water-based anti-fouling coating composition, and each examination was performed. Table 1 shows results.

### (Reference Example 3)

Into 222.7 parts of water-based dispersion obtained by "Manufacturing of water-based dispersion 2", colloidal silica (product name: ADELITE AT-30, manufactured by Asahi Denka Kogyo K.K.): 33.3 parts was mixed uniform to obtain a water-based anti-fouling coating composition of 43.1% of solids content. The above-mentioned coating formulation was given to this water-based anti-fouling coating composition, and each examination was performed. Table 1 shows results.

### (Reference Example 4)

Into 223.2 parts of water-based dispersions obtained by "Manufacturing of water-based dispersion 3", sulfosuccinic acid based surface active agent (product name: LATEMUL S-180A (active ingredient: approximately 50%), manufactured by Kao Corp.): 4 parts, anionic surface active agent including alkylene oxide group (product name: EMAL 20C (active ingredient: approximately 25%), manufactured by Kao Corp.): 2 parts, 20% aqueous solution of nonionic surface active agent including alkylene oxide group (product name: EMULGEN 120, manufactured by Kao Corp.): 2.5 parts, and colloidal silica (product name: Snowtex-40, manufactured by Nissan Chemical Industries, Ltd.): 25 parts were mixed uniform in this order to obtain a water-based anti-fouling coating composition of 44.0% of solids content. The above-mentioned coating formulation was given to this water-based anti-fouling coating composition, and each examination was performed. Table 1 shows results.

### (Example 1)

Into 223.7 parts of water-based dispersions obtained by "Manufacturing of water-based dispersion 4", sulfosuccinic acid based surface active agent (product name: aerosol OT-75 (active ingredient: approximately 75%), manufactured by Mitsui Cytec Inc.): 4 parts, anionic surface active agent including alkylene oxide group (product name: LEVENOL WZ (active ingredient: approximately 26%), manufactured by Kao Corp.): 2 parts, 20% aqueous solution of nonionic surface active agent including alkylene oxide group (product name: Newcol 506, manufactured by Nippon Nyukazai Co., Ltd.,): 2.5 parts, and colloidal silica (product name: ADELITE AT-40, manufactured by Asahi Denka Kogyo K.K.): 25 parts were mixed uniform in this order to obtain a water-based anti-fouling coating composition of 44.2 percents of solids content. The above-mentioned coating formulation was given to this water-based anti-fouling coating composition, and each examination was performed. Table 1 shows results.

### (Reference Example 5)

Into 223.7 parts of water-based dispersion obtained by "Manufacturing of water-based dispersion 4", sulfosuccinic acid based surface active agent (product name: LATEMUL S-180A (active ingredient: approximately 50%), manufactured by Kao Corp.): 6 parts, 20% aqueous solution of nonionic surface active agent including alkylene oxide group (product name: new call 950, manufactured by Kao Corp.): 2.5 parts, and colloidal silica (product name: Snowtex-C, manufactured by Nissan Chemical Industries, Ltd.): 50 parts were mixed uniform in this order to obtain a water-based anti-fouling coating composition of 40.1% of solids content. The above-mentioned coating formulation was given to this water-based anti-fouling coating composition, and each examination was performed. Table 1 shows results.

### (Reference Example 6)

Into 223.7 parts of water-based dispersions obtained by "Manufacturing of water-based dispersion 4", sulfosuccinic acid based surface active agent (product name: ELEMINOL JS-2 (active ingredient: approximately 38%), manufactured by Sanyo Chemical Industries, Ltd.): 8 parts, and colloidal silica (product name: ADELITE AT-20A, manufactured by Asahi Denka Kogyo K.K.): 50 parts were mixed uniform in this order to obtain a water-based anti-fouling coating composition of 40.0% of solids content. The above-mentioned coating formulation was given to this water-based anti-fouling coating composition, and each examination was performed. Table 1 shows results.

### (Example 2)

Into 219.8 parts of water-based dispersions obtained by "Manufacturing of water-based dispersion 5", sulfosuccinic acid based surface active agent (product name: aerosol OT-75 (active ingredient: approximately 75%), manufactured by Mitsui Cytec Inc.): 1.5 parts, and colloidal silica (product name: ADELITE AT-30A, manufactured by Asahi Denka Kogyo K.K.): 33.3 parts, were mixed uniform in this order to obtain a water-based anti-fouling coating composition of 43.6% of solids content. The above-mentioned coating formulation was given to this water-based anti-fouling coating composition, and each examination was performed. Table 1 shows results.

### (Example 3)

Into 219.8 parts of water-based dispersions obtained by "Manufacturing of water-based dispersion 6", sulfosuccinic acid based surface active agent (product name: PELEX OT-P (active ingredient: approximately 70%), manufactured by Kao Corp.): 1.5 parts, and colloidal silica (product name: ADELITE AT-30, manufactured by Asahi Denka Kogyo K.K.): 33.3 parts, were mixed uniform in this order to obtain a water-based anti-fouling coating composition of 43.6% of solids content. The above-mentioned coating formulation was given to this water-based anti-fouling coating composition, and each examination was performed. Table 1 shows results.

### (Example 4)

Into 221.2 parts of water-based dispersions obtained by "Manufacturing of water-based dispersion 7", colloidal silica (product name: ADELITE AT-30A, manufactured by Asahi Denka Kogyo K.K.): 33.3 parts was mixed uniform to obtain a water-based anti-fouling coating composition of 43.2% of solids content. The above-mentioned coating formulation was given to this water-based anti-fouling coating composition, and each examination was performed. Table 1 shows results.

### (Example 5)

Into 223.7 parts of water-based dispersions obtained by "Manufacturing of water-based dispersion 8", sulfosuccinic acid based non-reactive surface active agent (product name: aerosol OT-75 (active ingredient: approximately 75%), manufactured by Mitsui Cytec Inc.): 2.7 parts, and colloidal silica (product name: ADELITE AT-30A, manufactured by Asahi Denka Kogyo K.K.): 33.3 parts were mixed uniform in this order to obtain a water-based anti-fouling coating composition of 43.1% of solids content. The above-mentioned coating formulation was given to this water-based anti-fouling coating composition, and each examination was performed. Table 1 shows results.

### (Comparative Example 1)

A composition consisting of dimethyl cyclix (cyclic dimethyl siloxane oligomer 3 to 7 multimer mixture): 90 parts, γ-methacrylyl oxypropyl dimethoxy methylsilane (graft crossing agent): 10 parts, demineralized water: 300 parts, and sodium dodecylbenzene sulfonate (surface active agent): 0.5 parts was premixed with a homomixer, and then was sheared by a pressure of 200 kg/cm² with a homogenizer, forcibly emulsified to obtain a silicone raw material emulsion.

Subsequently, demineralized water: 100 parts and dodecylbenzene sulfonic acid (acidic emulsifier): 10 parts were introduced into a flask with an agitator, a condenser, a temperature controller, and a dropping pump, and then the above-mentioned silicone raw material emulsion was dropped in over 3 hours, keeping temperature in the flask at 85°C. After dropping completed, heating and agitating were continued for 1 hour more, an obtained emulsion was cooled to a room temperature, and the dodecylbenzene sulfonic acid was neutralized with sodium hydroxide to obtain a silicone emulsion (henceforth, SEm1). A number average molecular weight (GPC measured value) of obtained silicone gave about 100,000.

SEm1: 500 parts, demineralized water: 164 parts, and potassium persulfate: 2.4 parts were introduced into a flask with an agitator, a condenser, a temperature controller, a dropping pump, and a nitrogen introducing pipe, after raising a temperature up to 70°C, in nitrogen atmosphere, while agitating, a mixture of methyl methacrylate (henceforth, MMA): 168 parts, n-butyl methacrylate (henceforth, n-BMA): 168 parts, 2-ethylhexyl acrylate (henceforth, 2- EHA): 44 parts, and methacrylic acid (henceforth, MAA): 8 parts, and diacetone acrylamide (henceforth, DAAm): 12 parts were dropped in over 4 hours. The reaction liquid was maintained at 70°C after dropping completion for 1 hour, and furthermore temperature was raised up to 80°C, and maintained for 1 hour. Reaction liquid was cooled to room temperature, and neutralized with aqueous ammonia to obtain a graft block copolymer emulsion. Polymerization advanced stably and aggregation was not observed, either.

Then, colloidal silica water-based dispersion having a mean particle diameter of 10 to 20 nm (30% by weight of silica contents, manufactured by Nissan Chemical Industries, Ltd., trade name: Snowtex 30) 500 parts was added into the reaction liquid while agitating, and was maintained at room temperature for 1 hour. Subsequently, adipic acid dihydrazide (henceforth, ADH): 7.6 parts, and ethylene glycol monobutyl ether: 100 parts were added while agitating, and agitated for 30 minutes more to obtain a water-based anti-fouling coating composition. The above-mentioned coating formulation was given to this water-based anti-fouling coating composition, and each examination was performed. Table 1 shows results.

### (Comparative Example 2)

A composition consisting of dimethyl cyclix (cyclic dimethyl siloxane oligomer 3 to 7 multimer mixture): 90 parts, γ-methacrylyl oxypropyl dimethoxy methylsilane (graft crossing agent): 10 parts, demineralized water: 300 parts, and sodium dodecylbenzene sulfonate (surface active agent): 0.5 parts was premixed with a homomixer, and then was sheared by a pressure of 200 kg/cm² with a homogenizer, forcibly emulsified to obtain a silicone raw material emulsion.

Then, demineralized water: 100 parts and dodecylbenzene sulfonic acid (acidic emulsifier): 10 parts was introduced into a flask with an agitator, a condenser, a temperature controller, and a dropping pump, and over 3 hours, while maintaining a temperature in the flask at 85°C, the above-mentioned silicone raw material emulsion was dropped in. After dropping completion heating and agitating were continued for 1 hour more, and then obtained emulsion was cooled to a room temperature, and dodecylbenzene sulfonic acid was neutralized with sodium hydroxide to obtain a silicone emulsion (henceforth, SEm1). A number average molecular weight (GPC measured value) of the obtained silicone gave about 100,000.

SEm1: 500 parts, demineralized water: 164 parts, and potassium persulfate: 2.4 parts were introduced into a flask with an agitator, a condenser, a temperature controller, a dropping pump, and a nitrogen introducing pipe, and after raising temperature up to 70°C, while agitating in nitrogen atmosphere, a mixture of methyl methacrylate (henceforth, MMA): 168 parts, n-butyl methacrylate (hereinafter n-BMA): 168 parts, 2-ethylhexyl acrylate (hereinafter 2-EHA): 44 parts, and methacrylic acid (henceforth, MAA): 8 parts, and diacetone acrylamide (henceforth, DAAm): 12 parts was dropped in over 4 hours. After dropping completion, the reaction liquid was maintained at 70°C for 1 hour; furthermore temperature was raised to 80°C, and was maintained for 1 hour. The reaction liquid was cooled to room temperature, and was neutralized with aqueous ammonia to obtain a graft block copolymer emulsion. Polymerization advanced stably and formation of aggregate was not observed, either.

Then into the obtained emulsion 200 parts of colloidal silica water-based dispersion (30% by weight of silica contents, manufactured by Nissan Chemical Industries, Ltd., trade name: Snowtex 30) having a mean particle diameter of 10 to 20 nm was added, the system was maintained at 60°C for 1 hour.

After this, adipic acid dihydrazide (henceforth, ADH): 7.6 parts, and ethylene glycol monobutyl ether: 100 parts were added while agitating, agitated for 30 minutes more to obtain a water-based anti-fouling coating composition. The above-mentioned coating formulation was given to this water-based anti-fouling coating composition, and each examination was performed. Table 1 shows results.

**Table 1**

| | Coating stability | Water contact angle (degree) | Water resistance | Rain streaks-like fouling resistance | Weather resistance |
|---|---|---|---|---|---|
| Reference Example 1 | ○ | 50 | Δ | ⓞ | Δ |
| Reference Example 2 | ○ | 72 | Δ | ⓞ | Δ |
| Reference Example 3 | ○ | 74 | ○ | ○ | ○ |
| Reference Example 4 | ○ | 70 | Δ | ⓞ | Δ |
| Example 1 | ○ | 70 | Δ | ⓞ | Δ |
| Reference Example 5 | ○ | 72 | Δ | ○ | Δ |
| Reference Example 6 | ○ | 70 | ○ | ○ | Δ |
| Example 2 | ○ | 65 | ⓞ | ⓞ | ⓞ |
| Example 3 | ○ | 68 | ⓞ | ○ | ⓞ |
| Example 4 | ○ | 65 | ⓞ | ⓞ | ⓞ |
| Example 5 | ○ | 65 | ⓞ | ⓞ | ⓞ |
| Comparative example 1 | × | 87 | Δ | ○ | Δ |
| Comparative example 2 | × | 85 | Δ | ⓞ | Δ |

### INDUSTRIAL APPLICABILITY

Water-based anti-fouling coating composition of the present invention may be used for water-based coating, and may reduce rain streaks-like fouling when a coating of the composition is exposed to outdoors, especially fouling from immediately after film formation may be prevented, and maintain reduction of rain streak-like fouling over a long period of time. The coating has satisfactory storage stability.

## Claims

1. A water-based anti-fouling coating composition comprising:
a water based dispersion (A) which is a silicone-modified acrylic emulsion;
colloidal inorganic particles (B);
a sulfosuccinic acid based surface active agent (C) which does not have any radical polymerizable double bond; and
a surface active agent including an alkylene oxide group (D).

2. The water-based coating composition according to Claim 1, wherein the water-based dispersion (A) is an acrylic emulsion obtained by emulsion polymerization in the presence of the sulfosuccinic acid based surface active agent (C) and the surface active agent including the alkylene oxide group (D).

3. The water-based coating composition according to any one of Claim 1 or 2, wherein the amount of the colloidal inorganic particles (B) is 0.1 to 95 parts by mass, and the amount of the sulfosuccinic acid based surface active agent (C) is 0.1 to 20 parts by mass, the amount of the surface active agent including the alkylene oxide group (D) is 0.1 to 5 parts by mass, based on 100 parts by mass of the solid resin of the water-based dispersion (A).

4. The water-based coating composition according to any one of Claims 1 to 3, which is obtained by emulsion polymerization in the presence of a hydrolyzable silane (F).

5. The water-based coating composition according to Claim 4, wherein the hydrolyzable silane (F) includes a silane represented by a following general formula (a):
(R¹)ₙ-Si-(R²)₄₋ₙ (a)
where n is an integer of 0 to 3, R¹ is selected from the group consisting of hydrogen, aliphatic hydrocarbyl group with 1 to 16 carbon atoms, aryl group with 5 to 10 carbon atoms, cycloalkyl group with 5 to 6 carbon atoms, vinyl group, alkylacrylate group with 1 to 10 carbon atoms and alkylmethacrylate group with 1 to 10 carbon atoms; n units of R¹ may be identical or different; R² is selected from alkoxy group with 1 to 8 carbon atoms, acetoxy group or hydroxyl group; and 4-n units of R² may be identical or different.

6. The water-based coating composition according to Claim 4 or 5, wherein the hydrolyzable silane (F) includes, at a molar ratio of 100/1 to 1/100, in the general formula (a), at least one selected from the group consisting of a silane (I) having n = 0, and a silane (II) having n = 1, and
at least one selected from the group consisting of a silane (III) having n = 2, a silane (IV) having n = 3, a cyclic silane and a linear siloxane having a hydrolyzable group.

7. The water-based coating composition according to any one of Claims 1 to 6, wherein the colloidal inorganic particles (B) include colloidal inorganic particles coated with an organic polymer.

8. The water-based coating composition according to any one of Claims 1 to 7, wherein the colloidal inorganic particles (B) are colloidal silica.

9. The water-based coating composition according to any one of Claims 1 to 8, wherein the surface active agent including the alkylene oxide group (D) is a surface active agent having a radical polymerizable double bond and including the alkylene oxide group.

10. The water-based coating composition according to any one of Claims 1 to 8, wherein the water-based dispersion (A) is an acrylic emulsion obtained by emulsion polymerization of an ethylenic unsaturated monomer (E) including not less than 5 % by mass of a (meth)acrylic ester having a cycloalkyl group.

11. Use of the water-based coating composition according to any one of Claims 1 to 10, for coatings.

12. A coating including the water-based coating composition according to any one of Claims 1 to 10.

13. A coated article coated with the coating according to Claim 12.

14. An exterior wall material coated with the coating according to Claim 12.

15. A building coated with the coating according to Claim 12.

16. An anti-fouling article including a coating formed with the coating according to Claim 12.

17. A method for coating **characterized by** using the coating according to Claim 12.

## Patentansprüche

1. Antifoulingbeschichtungszusammensetzung auf Wasserbasis, umfassend:
eine Dispersion auf Wasserbasis (A), bei der es sich um eine silikonmodifizierte Acrylemulsion handelt;
kolloidale anorganische Teilchen (B);
ein auf Sulfobernsteinsäure beruhendes Tensid (C), das keine radikalisch polymerisierbare Doppelbindung aufweist; und
ein Tensid, das eine Alkylenoxidgruppe umfasst (D).

2. Beschichtungszusammensetzung auf Wasserbasis gemäß Anspruch 1, wobei die Dispersion auf Wasserbasis (A) eine Acrylemulsion ist, die durch Emulsionspolymerisation in Gegenwart des auf Sulfobernsteinsäure beruhenden Tensids (C) und des Tensids, das die Alkylenoxidgruppe umfasst (D), erhalten wird.

3. Beschichtungszusammensetzung auf Wasserbasis gemäß einem der Ansprüche 1 oder 2, wobei die Menge der kolloidalen anorganischen Teilchen (B) 0,1 bis 95 Massenteile beträgt und die Menge des auf Sulfobernsteinsäure beruhenden Tensids (C) 0,1 bis 20 Massenteile beträgt, die Menge des Tensids, das die Alkylenoxidgruppe umfasst (D), 0,1 bis 5 Massenteile beträgt, bezogen auf 100 Massenteile des festen Harzes der Dispersion auf Wasserbasis (A).

4. Beschichtungszusammensetzung auf Wasserbasis gemäß einem der Ansprüche 1 bis 3, die durch Emulsionspolymerisation in Gegenwart eines hydrolysierbaren Silans (F) erhalten wird.

5. Beschichtungszusammensetzung auf Wasserbasis gemäß Anspruch 4, wobei das hydrolysierbare Silan (F) ein Silan umfasst, das durch die folgende allgemeine Formel (a) repräsentiert wird:
(R¹)ₙ-Si-(R²)₄₋ₙ (a),
wobei n eine ganze Zahl von 0 bis 3 ist, R¹ aus der Gruppe ausgewählt ist, die aus Wasserstoff, einer aliphatischen Hydrocarbylgruppe mit 1 bis 16 Kohlenstoffatomen, einer Arylgruppe mit 5 bis 10 Kohlenstoffatomen, einer Cycloalkylgruppe mit 5 bis 6 Kohlenstoffatomen, einer Vinylgruppe, einer Alkylacrylatgruppe mit 1 bis 10 Kohlenstoffatomen und einer Alkylmethacrylatgruppe mit 1 bis 10 Kohlenstoffatomen besteht, n Einheiten von R¹ gleich oder verschieden sein können, R² aus einer Alkoxygruppe mit 1 bis 8 Kohlenstoffatomen, einer Acetoxygruppe oder Hydroxygruppe ausgewählt ist und 4-n Einheiten von R² gleich oder verschieden sein können.

6. Beschichtungszusammensetzung auf Wasserbasis gemäß Anspruch 4 oder 5, wobei das hydrolysierbare Silan (F) in der allgemeinen Formel (a) in einem Stoffmengenverhältnis von 100/1 bis 1/100 wenigstens eines, das aus der Gruppe ausgewählt ist, die aus einem Silan (I) mit n = 0 und einem Silan (II) mit n = 1 besteht, und wenigstens eines, das aus der Gruppe ausgewählt ist, die aus einem Silan (III) mit n = 2, einem Silan (IV) mit n = 3, einem cyclischen Silan und einem linearen Siloxan mit einer hydrolysierbaren Gruppe besteht, umfasst.

7. Beschichtungszusammensetzung auf Wasserbasis gemäß einem der Ansprüche 1 bis 6, wobei die kolloidalen anorganischen Teilchen (B) kolloidale anorganische Teilchen, die mit einem organischen Polymer beschichtet sind, umfassen.

8. Beschichtungszusammensetzung auf Wasserbasis gemäß einem der Ansprüche 1 bis 7, wobei es sich bei den kolloidalen anorganischen Teilchen (B) um kolloidale Kieselsäure handelt.

9. Beschichtungszusammensetzung auf Wasserbasis gemäß einem der Ansprüche 1 bis 8, wobei das Tensid, das die Alkylenoxidgruppe umfasst (D), ein Tensid ist, das eine radikalisch polymerisierbare Doppelbindung aufweist und die Alkylenoxidgruppe umfasst.

10. Beschichtungszusammensetzung auf Wasserbasis gemäß einem der Ansprüche 1 bis 8, wobei die Dispersion auf Wasserbasis (A) eine Acrylemulsion ist, die durch Emulsionspolymerisation eines ethylenisch ungesättigten Monomers (E) einschließlich nicht weniger als 5 Massen-% eines (Meth)acrylsäureesters mit einer Cycloalkylgruppe erhalten wird.

11. Verwendung der Beschichtungszusammensetzung auf Wasserbasis gemäß einem der Ansprüche 1 bis 10 für Beschichtungen.

12. Beschichtung, umfassend die Beschichtungszusammensetzung auf Wasserbasis gemäß einem der Ansprüche 1 bis 10.

13. Beschichteter Artikel, der mit der Beschichtung gemäß Anspruch 12 beschichtet ist.

14. Außenwandmaterial, das mit der Beschichtung gemäß Anspruch 12 beschichtet ist.

15. Gebäude, das mit der Beschichtung gemäß Anspruch 12 beschichtet ist.

16. Antifoulingartikel, der eine Beschichtung umfasst, die mit der Beschichtung gemäß Anspruch 12 gebildet ist.

17. Verfahren zur Beschichtung, **dadurch gekennzeichnet, dass** die Beschichtung gemäß Anspruch 12 verwendet wird.

## Revendications

1. Composition aqueuse de revêtement antisalissure comprenant :
une dispersion aqueuse (A) qui est une émulsion acrylique modifiée par de la silicone ;
des particules inorganiques colloïdales (B) ;
un tensiocatif à base d'acide sulfosuccinique (C) qui ne comporte pas de double liaison polymérisable par voie radicalaire ; et
un tensiocatif comprenant un groupe oxyde d'alkylène (D).

2. Composition aqueuse de revêtement selon la revendication 1, dans laquelle la dispersion aqueuse (A) est une émulsion acrylique obtenue par polymérisation en émulsion en présence du tensiocatif à base d'acide sulfosuccinique (C) et du tensiocatif comprenant le groupe oxyde d'alkylène (D).

3. Composition aqueuse de revêtement selon l'une quelconque des revendications 1 ou 2, dans laquelle la quantité de particules inorganiques colloïdales (B) est de 0,1 à 95 parties en masse, et la quantité de tensiocatif à base d'acide sulfosuccinique (C) est de 0,1 à 20 parties en masse, la quantité de tensiocatif comprenant le groupe oxyde d'alkylène (D) est de 0,1 à 5 parties en masse, par rapport à 100 parties en masse de la résine solide de la dispersion aqueuse (A).

4. Composition aqueuse de revêtement selon l'une quelconque des revendications 1 à 3, qui est obtenue par polymérisation en émulsion en présence d'un silane hydrolysable (F).

5. Composition aqueuse de revêtement selon la revendication 4, dans laquelle le silane hydrolysable (F) comprend un silane représenté par la formule générale (a) suivante :
(R¹)ₙ-Si-(R²)₄₋ₙ (a)
où n représente un nombre entier de 0 à 3, R¹ est choisi dans le groupe constitué d'un atome d'hydrogène, d'un groupe hydrocarbyle aliphatique comportant de 1 à 16 atomes de carbone, d'un groupe aryle comportant de 5 à 10 atomes de carbone, d'un groupe cycloalkyle comportant de 5 à 6 atomes de carbone, d'un groupe vinyle, d'un groupe alkylacrylate comportant de 1 à 10 atomes de carbone et d'un groupe alkylméthacrylate comportant de 1 à 10 atomes de carbone ; n unités de R¹ peuvent être identiques ou différentes ; R² est choisi parmi un groupe alcoxy comportant de 1 à 8 atomes de carbone, un groupe acétoxy ou un groupe hydroxyle ; et 4-n unités de R² peuvent être identiques ou différentes.

6. Composition aqueuse de revêtement selon la revendication 4 ou 5, dans laquelle le silane hydrolysable (F) comprend, dans un rapport molaire de 100/1 à 1/100, dans la formule générale (a), au moins un élément choisi dans le groupe constitué d'un silane (I) dont n = 0, et d'un silane (II) dont n = 1, et
au moins un élément choisi dans le groupe constitué d'un silane (III) dont n = 2, d'un silane (IV) dont n = 3, d'un silane cyclique et d'un siloxane linéaire comportant un groupe hydrolysable.

7. Composition aqueuse de revêtement selon l'une quelconque des revendications 1 à 6, dans laquelle les particules inorganiques colloïdales (B) comprennent des particules inorganiques colloïdales revêtues d'un polymère organique.

8. Composition aqueuse de revêtement selon l'une quelconque des revendications 1 à 7, dans laquelle les particules inorganiques colloïdales (B) sont de la silice colloïdale.

9. Composition aqueuse de revêtement selon l'une quelconque des revendications 1 à 8, dans laquelle le tensiocatif comprenant le groupe oxyde d'alkylène (D) est un tensiocatif comportant une double liaison polymérisable par voie radicalaire et comprenant le groupe oxyde d'alkylène.

10. Composition aqueuse de revêtement selon l'une quelconque des revendications 1 à 8, dans laquelle la dispersion aqueuse (A) est une émulsion acrylique obtenue par polymérisation en émulsion d'un monomère insaturé éthylénique (E) ne comprenant pas moins de 5 % en masse d'un ester (méth)acrylique comportant un groupe cycloalkyle.

11. Utilisation d'une composition aqueuse de revêtement selon l'une quelconque des revendications 1 à 10, pour des revêtements.

12. Revêtement comprenant la composition aqueuse de revêtement selon l'une quelconque des revendications 1 à 10.

13. Article revêtu revêtu à l'aide du revêtement selon la revendication 12.

14. Matériau pour mur extérieur revêtu à l'aide du revêtement selon la revendication 12.

15. Bâtiment revêtu à l'aide du revêtement selon la revendication 12.

16. Article antisalissure comprenant un revêtement formé à l'aide du revêtement selon la revendication 12.

17. Procédé de revêtement **caractérisé par** l'utilisation du revêtement selon la revendication 12.
